# EUROPÄISCHE PATENTSCHRIFT

(11) **EP 3 181 958 B1**
(45) Veröffentlichungstag und Bekanntmachung des Hinweises auf die Patenterteilung: **09.05.2018**
(21) Anmeldenummer: 16195311.2
(22) Anmeldetag: 24.10.2016
(51) Int. Cl.: F16H 61/4078, F16H 61/444

(54) **MOBILE ARBEITSMASCHINE MIT EINEM HYDROSTATISCHEN FAHRANTRIEB UND EINER ARBEITSHYDRAULIKPUMPE**
MOBILE MACHINE WITH A HYDROSTATIC DRIVE AND A HYDRAULIC PUMP
MACHINE MOBILE AVEC UNE ENTRAÎNEMENT DE ROULEMENT HYDROSTATIQUE ET UNE POMPE HYDRAULIQUE

(30) Priorität: 15.12.2015 DE 102015121782
(43) Veröffentlichungstag der Anmeldung: 21.06.2017
(73) Patentinhaber: Linde Hydraulics GmbH & Co. KG, 63743 Aschaffenburg (DE)
(72) Erfinder: Krittian, Lukas, 63739 Aschaffenburg (DE); Dierkes, Thomas, 63741 Aschaffenburg (DE); Steigerwald, Martin, 63864 Glattbach (DE)
(74) Vertreter: Patentship Patentanwaltsgesellschaft mbH

(56) Entgegenhaltungen:
- DE-A1-102006 025 985
- US-A- 6 145 287

## Beschreibung

Die Erfindung betrifft eine mobile Arbeitsmaschine mit einem hydrostatischen Fahrantrieb und einer Arbeitshydraulikpumpe, wobei der hydrostatische Fahrantrieb eine von einem Antriebsmotor, insbesondere einem Verbrennungsmotor, der Arbeitsmaschine angetriebene Fahrpumpe und zumindest einen im geschlossenen Kreislauf an die Fahrpumpe angeschlossenen Fahrmotor aufweist, wobei der geschlossenen Kreislauf eine erste Druckmittelleitung und eine zweite Druckmittelleitung umfasst, und wobei die Arbeitshydraulikpumpe von dem Antriebsmotor angetrieben ist und als im offenen Kreislauf betriebene Pumpe ausgebildet ist, die mittels einer Ansaugleitung Druckmittel aus einem Behälter ansaugt und das Druckmittel in eine Förderleitung zur Versorgung mindestens eines Verbrauchers einer Arbeitshydraulik der Arbeitsmaschine mit Druckmittel fördert.

Mobile Arbeitsmaschinen mit einem hydrostatischen Fahrantrieb, der von einer Fahrpumpe gebildet ist, die im geschlossenen Kreislaufs mit einem Fahrmotor oder mehreren Fahrmotoren verbunden ist, weisen eine entsprechend dem maximalen installierten Verdrängervolumen der Fahrpumpe und des Fahrmotors gebildete Getriebespreizung des Fahrantriebs auf.

In Abhängigkeit von der für die Arbeitsmaschine geforderten Zugkraft ist unter Berücksichtigung des maximalen Systemdrucks in dem geschlossenen Kreislauf des hydrostatischen Fahrantriebs ein entsprechendes Verdrängervolumen des Fahrmotors bzw. der Fahrmotoren installiert.

Um eine gewünschte maximale Fahrgeschwindigkeit der Arbeitsmaschine zu erzielen, ist es erforderlich, in Abhängigkeit von einer Maximaldrehzahl des die Fahrpumpe antreibenden Antriebsmotors eine Fahrpumpe zu installieren, deren Verdrängervolumen ausreichend groß dimensioniert ist, dass der benötigte Volumenstrom zum Erreichen der gewünschten maximalen Fahrgeschwindigkeit bei gegebenem Verdrängervolumen des Fahrmotors von der Fahrpumpe gefördert wird.

Die Verlustleistung der Fahrpumpe steigt überproportional mit der Abtriebsdrehzahl der Fahrpumpe an. Bei maximaler Drehzahl kann die Verlustleistung der Fahrpumpe bis zu 20% der installierten Leistung des Antriebsmotors betragen. Aus diesem Grund wird bei bekannten Arbeitsmaschinen die maximale Fahrgeschwindigkeit reduziert.

Für den Einsatz mobiler Arbeitsmaschinen sind zunehmend Transportfahrten gefordert, die mit einer erhöhten Fahrgeschwindigkeit erfolgen sollen. Diese erhöhten Fahrgeschwindigkeiten könnten durch zusätzliche mechanische Getriebe erzielt werden, die dem hydrostatischen Fahrantrieb nachgeschaltet sind und von dem Fahrmotor angetrieben sind, oder alternativ durch eine Verwendung einer Fahrpumpe mit vergrößertem Verdrängervolumen erzielt werden. Die Verwendung einer Fahrpumpe mit vergrößertem Verdrängervolumen verursacht jedoch eine erhöhte Verlustleistung. Weiterhin führen die Verwendung einer Fahrpumpe mit vergrößertem Verdrängervolumen sowie die Verwendung zusätzlicher mechanischer Getriebe zu zusätzlichen Kosten des Fahrantriebs sowie zu einer Verringerung des Wirkungsgrades des Fahrantriebs. US6145287A beschreibt eine mobile Arbeitsmaschine gemäß dem Oberbegriff des Anspruchs 1. Der vorliegenden Erfindung liegt die Aufgabe zugrunde, eine mobile Arbeitsmaschine der eingangs genannten Gattung zur Verfügung zu stellen, bei der mit geringem Bauaufwand erhöhte Fahrgeschwindigkeiten erzielt werden können.

Diese Aufgabe wird erfindungsgemäß durch eine mobile Arbeitsmaschine gemäß den Merkmalen des Anspruchs 1 gelöst, wobei eine Steuerventileinrichtung vorgesehen ist, mittels der die Verbindung der Förderleitung und der Ansaugleitung der Arbeitshydraulikpumpe mit den Druckmittelleitungen des geschlossenen Kreislaufs steuerbar ist, wobei die Steuerventileinrichtung eine Sperrstellung und mindestens eine Verbindungsstellung aufweist, wobei in der Verbindungsstellung die Förderleitung der Arbeitshydraulikpumpe mit der hochdruckseitigen Druckmittelleitung des hydrostatischen Fahrantriebs verbindbar ist, wobei der Fördervolumenstrom der Arbeitshydraulikpumpe in die hochdruckseitige Druckmittelleitung des hydrostatischen Fahrantriebs einspeisbar ist und zur Versorgung des Fahrmotors zur Verfügung steht, und wobei in der Verbindungsstellung die Ansaugleitung der Arbeitshydraulikpumpe mit der niederdruckseitigen Druckmittelleitung des hydrostatischen Fahrantriebs verbindbar ist, wobei in der Ansaugleitung der Arbeitshydraulikpumpe ein in Richtung zum Behälter sperrendes Sperrventil, insbesondere ein Rückschlagventil, angeordnet ist und die Zurückführung des Volumenstrom aus der niederdruckseitigen Druckmittelleitung des hydrostatischen Fahrantriebs in die Ansaugleitung zwischen dem Sperrventil und einer Ansaugseite der Arbeitshydraulikpumpe erfolgt. Erfindungsgemäß ist somit eine Steuerventileinrichtung vorgesehen, mittels der der geschlossene Kreislauf des Fahrantriebs in der Verbindungsstellung aufgetrennt werden kann, so dass der von der Arbeitshydraulikpumpe der Arbeitsmaschine geförderte Fördervolumenstrom zusätzlich in die hochdruckseitige Druckmittelleitung und somit die Hochdruckseite des geschlossenen Kreislaufs des hydrostatischen Fahrtriebs eingespeist wird und der Fahrmotor von dem Fördervolumenstrom der Fahrpumpe und zusätzlich von dem Fördervolumenstrom der Arbeitshydraulikpumpe versorgt wird. Dem Fahrmotor steht somit die Summe aus dem Fördervolumenstrom der Fahrpumpe und dem Fördervolumenstrom der Arbeitshydraulikpumpe zur Verfügung. In der Verbindungsstellung verbindet die Steuerventileinrichtung die Ansaugleitung der Arbeitshydraulikpumpe mit der niederdruckseitigen Druckmittelleitung des hydrostatischen Fahrantriebs. In der Ansaugleitung der Arbeitshydraulikpumpe ist ein in Richtung zum Behälter sperrendes Sperrventil, insbesondere ein Rückschlagventil, angeordnet, wobei die Zurückführung des Volumenstrom aus der niederdruckseitigen Druckmittelleitung des hydrostatischen Fahrantriebs in die Ansaugleitung zwischen dem Sperrventil und einer Ansaugseite der Arbeitshydraulikpumpe erfolgt. Mit der Steuerventileinrichtung wird somit in der Verbindungsstellung erzielt, dass in der niederdruckseitige Druckmittelleitung und somit auf der Niederdruckseite des geschlossenen Kreislaufs der von dem Fahrmotor abströmende Volumenstrom wieder getrennt und entsprechend des jeweiligen Verdrängervolumens der Arbeitshydraulikpumpe und der Fahrpumpe den beiden Pumpen anteilig zugeführt wird und somit der Arbeitshydraulikpumpe auf der Ansaugseite anteilig zugeführt wird. Mit der Steuerventileinrichtung in Verbindung mit dem Sperrventil in der Ansaugleitung der Arbeitshydraulik wird hierbei erzielt, dass die Arbeitshydraulikpumpe in der Verbindungsstellung der Steuerventileinrichtung ebenfalls im geschlossenen Kreislauf betrieben wird, die an der Förderseite mit der hochdruckseitigen Druckmittelleitung des geschlossenen Kreislaufs des Fahrantriebs und an der Ansaugseite mit der niederdruckseitigen Druckmittelleitung des geschlossenen Kreislaufs des Fahrantriebs verbunden ist, so dass die Arbeitshydraulikpumpe als zweite Pumpe, die der Fahrpumpe parallel geschaltet ist, in den geschlossenen Kreislauf des Fahrantriebs eingebunden wird. In der Verbindungsstellung der Steuerventileinrichtung wird somit die Arbeitshydraulikpumpe ein Teil des geschlossenen Kreislaufs des Fahrantriebs und unterstützt die Fahrpumpe bei der Versorgung des Fahrmotors, beispielsweise bei höheren Fahrgeschwindigkeiten. In der Sperrstellung, beispielsweise bei niedrigen Fahrgeschwindigkeiten trennt die Steuerventileinrichtung die Arbeitshydraulikpumpe von dem geschlossenen Kreislauf des Fahrantriebs, so dass die Arbeitshydraulikpumpe im offenen Kreislauf betrieben ist. Mit der Steuerventileinrichtung in Verbindung mit dem Sperrventil in der Ansaugleitung der Arbeitshydraulikpumpe kann somit auf einfache Weise und bei geringem Bauaufwand erzielt werden, dass die Arbeitshydraulikpumpe in den geschlossenen Kreislaufs des Fahrantriebs eingebunden werden kann, so dass der Volumenstrom zum Antrieb des Fahrmotors bei höheren Fahrgeschwindigkeiten anteilig von der Fahrpumpe und der Arbeitshydraulikpumpe bereitgestellt wird. Das Verdrängervolumen der Fahrpumpe kann somit bei gleicher erzielbarer Fahrgeschwindigkeit verringert werden, wodurch sich Vorteile hinsichtlich des Bauraums, der Kosten der Fahrpumpe und des Wirkungsrades des Fahrantriebs erzielen lassen. Zudem kann die Verlustleistung der Fahrpumpe verringert werden. Da bei der erfindungsgemäßen Arbeitsmaschine die Arbeitshydraulikpumpe ebenfalls zur Versorgung des Fahrmotors verwendet werden kann, ergeben sich Vorteile auf den Gesamtwirkungsgrad der Arbeitsmaschine, da die Arbeitshydraulikpumpe bei höheren Fahrgeschwindigkeiten nicht mehr in einem Leerlaufbetrieb mitgeschleppt wird, sondern bei einem günstigen Wirkungsgrad zur Versorgung des Fahrmotors verwendet werden kann. Alternativ kann durch die zusätzliche Versorgung des Fahrmotors durch die Arbeitshydraulikpumpe bei unverändertem Verdrängervolumen der Fahrpumpe und gleicher erzielbarer Fahrgeschwindigkeit die Fahrgeschwindigkeit bei verringerter Antriebsdrehzahl des Antriebsmotors erzielt werden. Alternativ kann durch die zusätzliche Versorgung des Fahrmotors durch die Arbeitshydraulikpumpe bei unverändertem Verdrängervolumen der Fahrpumpe die Fahrgeschwindigkeit der Arbeitsmaschine erhöht werden.

Gemäß einer vorteilhafte Ausführungsform der Erfindung ist die Steuerventileinrichtung elektrisch betätigbar und steht zur Ansteuerung mit einer elektronischen Steuereinrichtung in Verbindung, wobei die elektronische Steuereinrichtung derart ausgebildet ist, dass oberhalb einer Grenzfahrgeschwindigkeit die Steuerventileinrichtung in die Verbindungsstellung betätigt wird unterhalb der Grenzfahrgeschwindigkeit die Steuerventileinrichtung in die Sperrstellung betätigt wird. Mit einer elektronischen Steuereinrichtung wird es auf einfache Weise ermöglicht, die Steuerventileinrichtung bei höheren Fahrgeschwindigkeiten in die Verbindungstellung zu betätigen, um die Arbeitshydraulikpumpe in den geschlossenen Kreislauf des Fahrantriebs zuzuschalten und den Fahrmotor von der Fahrpumpe und der Arbeitshydraulikpumpe mit Druckmittel zu versorgen. Bei höheren Fahrgeschwindigkeiten ist in der Regel für den Antrieb des Fahrmotors ein niedrigeres Druckniveau erforderlich wie das maximale Druckniveau des Fahrantriebs. Da bei Arbeitsmaschinen in der Regel das maximale Druckniveau des Fahrantriebs höher als das maximale Druckniveau der Arbeitshydraulik ist, wird hierdurch auf einfache Weise erzielt, dass die Arbeitshydraulikpumpe nur dann in den hydrostatischen Fahrantrieb zugeschalten wird, wenn das Druckniveau in dem geschlossenen Kreislauf des Fahrantriebs auf einem Wert ist, der dem Druckniveau der Arbeitshydraulikpumpe ist. Es ist somit nicht erforderlich, das maximale Druckniveau der Arbeitshydraulikpumpe auf das maximale Druckniveau des Fahrantriebs anzuheben.

Besondere Vorteile ergeben sich, wenn die Arbeitshydraulikpumpe als elektrisch in dem Verdrängervolumen verstellbare Verstellpumpe ausgebildet ist und zur Vorgabe des Verdrängervolumens mit der elektronischen Steuereinrichtung in Verbindung steht, wobei die elektronische Steuereinrichtung derart ausgebildet ist, dass das Verdrängervolumen zur Versorgung des Fahrmotors auf einen Wert unterhalb des maximalen Verdrängervolumens begrenzt wird. Sofern die Arbeitshydraulikpumpe zur Versorgung des Fahrmotors in den geschlossenen Kreislauf des Fahrantriebs zugeschalten wird, wird hierdurch erzielt, dass nur eine definierte Teilmenge des Förderstroms der Arbeitshydraulikpumpe zur Unterstützung der Fahrpumpe und Versorgung des Fahrmotors bereitgestellt wird. Hierdurch wird ermöglicht, dass die Arbeitshydraulikpumpe durch Erhöhen des Verdrängervolumens noch einen Förderstrom zur Versorgung der Verbraucher der Arbeitshydraulik liefern kann.

Gemäß einer vorteilhaften Ausgestaltungsform der Erfindung ist die Steuerventileinrichtung als Dreistellungs-Sechsanschlussventil ausgebildet, das an eine erste Verbindungsleitung, die mit der ersten Druckmittelleitung des geschlossenen Kreislaufs verbunden ist, an eine zweite Verbindungsleitung, die mit der zweiten Druckmittelleitung des geschlossenen Kreislaufs verbunden ist, an eine Förderzweigleitung, die mit der Förderleitung der Arbeitshydraulikpumpe in Verbindung steht, und an eine Ansaugzweigleitung, die mit der Ansaugleitung der Arbeitshydraulikpumpe in Verbindung steht, angeschlossen ist und einen Durchflusspfad der Förderleitung der Arbeitshydraulik steuert, wobei in der Sperrstellung der Steuerventileinrichtung der Durchflusspfad der Förderleitung der Arbeitshydraulik geöffnet ist und die erste Verbindungsleitung, die zweite Verbindungsleitung, die Förderzweigleitung und die Ansaugzweigleitung abgesperrt sind, in einer ersten Verbindungstellung der Steuerventileinrichtung der Durchflusspfad der Förderleitung der Arbeitshydraulik absperrt sind und die Förderzweigleitung mit der ersten Druckmittelleitung und die Ansaugzweigleitung mit der zweiten Druckmittelleitung verbunden sind und in einer zweiten Verbindungstellung der Steuerventileinrichtung der Durchflusspfad der Förderleitung der Arbeitshydraulik absperrt sind und die Förderzweigleitung mit der zweiten Druckmittelleitung und die Ansaugzweigleitung mit der ersten Druckmittelleitung verbunden sind. Mit einer derartigen Steuerventileinrichtung kann auf einfache Weise die Arbeitshydraulikpumpe in den Verbindungsstellungen für beide Fahrtrichtungen der Arbeitsmaschine in den geschlossenen Kreislauf des Fahrantriebs zugeschalten und eingebunden werden. Über den Durchflusspfad kann in der Sperrstellung der Steuerventileinrichtung eine Versorgung der Verbraucher der Arbeitshydraulik durch die Arbeitshydraulikpumpe sichergestellt werden. In den Verbindungstellungen ist der Durchflusspfad der Steuerventileinrichtung abgesperrt, so dass die Arbeitshydraulikpumpe die Verbraucher der Arbeitshydraulik nicht mit Druckmittel versorgen kann.

Gemäß einer alternativen und vorteilhaften Ausgestaltungsform der Erfindung ist die Steuerventileinrichtung als Dreistellungs-Vieranschlussventil ausgebildet, das an eine erste Verbindungsleitung, die mit der ersten Druckmittelleitung des geschlossenen Kreislaufs verbunden ist, an eine zweite Verbindungsleitung, die mit der zweiten Druckmittelleitung des geschlossenen Kreislaufs verbunden ist, an eine Förderzweigleitung, die mit der Förderleitung der Arbeitshydraulikpumpe in Verbindung steht, und an eine Ansaugzweigleitung, die mit der Ansaugleitung der Arbeitshydraulikpumpe in Verbindung steht, angeschlossen ist, wobei in der Sperrstellung der Steuerventileinrichtung die erste Verbindungsleitung, die zweite Verbindungsleitung, die Förderzweigleitung und die Ansaugzweigleitung abgesperrt sind, in einer ersten Verbindungstellung der Steuerventileinrichtung die Förderzweigleitung mit der ersten Druckmittelleitung und die Ansaugzweigleitung mit der zweiten Druckmittelleitung verbunden sind und in einer zweiten Verbindungstellung der Steuerventileinrichtung die Förderzweigleitung mit der zweiten Druckmittelleitung und die Ansaugzweigleitung mit der ersten Druckmittelleitung verbunden sind. Mit einer derartigen Steuerventileinrichtung kann auf einfache Weise die Arbeitshydraulikpumpe in den Verbindungsstellungen für beide Fahrtrichtungen der Arbeitsmaschine in den geschlossenen Kreislauf des Fahrantriebs zugeschalten und eingebunden werden. Mit einer derartigen Steuerventileinrichtung kann in der Sperrstellung der Steuerventileinrichtung eine Versorgung der Verbraucher der Arbeitshydraulik durch die Arbeitshydraulikpumpe sichergestellt werden und in den Verbindungstellungen die Arbeitshydraulikpumpe zur zusätzlichen Versorgung des Fahrmotors verwendet werden.

Gemäß einer alternativen und vorteilhaften Ausgestaltungsform der Erfindung ist die Steuerventileinrichtung als Zweistellungs-Vieranschlussventil ausgebildet, das an eine erste Verbindungsleitung, die mit der ersten Druckmittelleitung des geschlossenen Kreislaufs verbunden ist, an eine zweite Verbindungsleitung, die mit der zweiten Druckmittelleitung des geschlossenen Kreislaufs verbunden ist, an eine Förderzweigleitung, die mit der Förderleitung der Arbeitshydraulikpumpe in Verbindung steht, und an eine Ansaugzweigleitung, die mit der Ansaugleitung der Arbeitshydraulikpumpe in Verbindung steht, angeschlossen ist, wobei in der Sperrstellung der Steuerventileinrichtung die erste Verbindungsleitung, die zweite Verbindungsleitung, die Förderzweigleitung und die Ansaugzweigleitung abgesperrt sind, und in einer Verbindungstellung der Steuerventileinrichtung die Förderzweigleitung mit der ersten Druckmittelleitung und die Ansaugzweigleitung mit der zweiten Druckmittelleitung verbunden sind. Mit einer derartigen Steuerventileinrichtung kann mit geringem Bauaufwand bei Arbeitsmaschinen mit einer Vorzugsfahrtrichtung die Arbeitshydraulikpumpe in der Verbindungsstellung für eine der beiden Fahrtrichtungen der Arbeitsmaschine in den geschlossenen Kreislauf des Fahrantriebs zugeschalten und eingebunden werden.

Besondere Vorteile ergeben sich, wenn eine Stauventileinrichtung vorgesehen ist, mittels der der Volumenstrom der Arbeitshydraulikpumpe zu dem Verbraucher der Arbeitshydraulik androsselbar ist. Mit einer Stauventileinrichtung wird es auf einfache Weise möglich, in der zur Arbeitshydraulik geführten Förderleitung der Arbeitshydraulikpumpe einen Druck aufzustauen, um in der Verbindungsstellung bzw. den Verbindungsstellungen der Steuerventileinrichtung in der Förderzweigleitung das Druckniveau des geschlossenen Kreislaufs des Fahrantriebs zu erzielen, so dass der Volumenstrom der Arbeitshydraulikpumpe dem Fahrmotor zur Verfügung gestellt wird.

Die Stauventileinrichtung ist vorteilhafterweise elektrisch betätigbar und steht zur Ansteuerung mit der elektronischen Steuereinrichtung in Verbindung. Hierdurch kann auf einfache Weise die zur Arbeitshydraulik geführte Förderleitung der Arbeitshydraulikpumpe durch entsprechende Ansteuerung der Stauventileinrichtung angedrosselt werden, um für das Zuschalten der Arbeitshydraulikpumpe in den geschlossenen Kreislauf des Fahrantriebs bei der Betätigung der Steuerventileinrichtung in die Verbindungstellung das Druckniveau des geschlossenen Kreislaufs zu erzielen.

Die Stauventileinrichtung kann gemäß einer vorteilhaften Ausgestaltungsform der Erfindung als Retarderventil ausgebildet sein.

Die Stauventileinrichtung kann gemäß einer vorteilhaften Ausgestaltungsform der Erfindung als Schaltventil mit einer Sperrstellung und einer Öffnungsstellung ausgebildet sein. Mit einem derartigen Sperrventil kann in der Sperrstellung eine vollständige Trennung der Arbeitshydraulikpumpe von den Verbrauchern der Arbeitshydraulik erzielt werden. Mit dieser Trennfunktion der Arbeitshydraulikpumpe von den Verbrauchern der Arbeitshydraulik in der Sperrstellung des Sperrventils können beim Zuschalten der Arbeitshydraulikpumpe in den geschlossenen Kreislauf des Fahrantriebs Umlaufverluste vermieden werden, die entstehen, wenn die Arbeitshydraulikpumpe überschüssig geförderten Volumenstrom über eine Umlaufdruckwaage der Arbeitshydraulik zu einem Behälter abführt.

Die Stauventileinrichtung ist hierzu gemäß einer vorteilhaften Ausgestaltungsform der Erfindung in der Förderleitung stromab des Anschlusses der Förderzweigleitung angeordnet.

Besondere Vorteile ergeben sich, wenn gemäß einer Ausgestaltungsform der Erfindung die Stauventileinrichtung einen Volumenstromregler aufweist, der mittels eines elektrisch betätigten Schaltventils zu- und abschaltbar ist. Mit einem derartigen Volumenstromregler wird erzielt, dass beim Zuschalten der Arbeitshydraulikpumpe in den geschlossenen Kreislauf des Fahrantriebs eine Versorgung der Verbraucher der Arbeitshydraulik mit einem an dem Volumenstromregler vorgegebenen Volumenstrom ermöglicht werden kann, um Korrekturen an der Verbrauchern der Arbeitshydraulik im Fahrbetrieb der Arbeitsmaschine zu ermöglichen. Mit dem Schaltventil kann der an dem Volumenstromregler definierte Volumenstrom bei entsprechender Anforderung durch einen Verbraucher der Arbeitshydraulik bedarfsgerecht geschalten werden, so dass Verluste verringert werden.

Der Volumenstromregler ist gemäß einer Ausgestaltungsform der Erfindung in einer der Förderleitung parallel geschalteten Zweigleitung angeordnet, die mit der Förderleitung stromab des Anschlusses der Förderzweigleitung verbindbar ist.

Der Volumenstromregler ist gemäß einer alternativen Ausgestaltungsform der Erfindung in einer Zweigleitung angeordnet, die von der Förderzweigleitung zu der Förderleitung geführt ist.

Gemäß einer Weiterbildung der Erfindung weist die Stauventileinrichtung ein in Richtung zu dem Verbraucher der Arbeitshydraulik öffnendes Sperrventil, insbesondere Rückschlagventil, auf. Mit einem derartigen Sperrventil können ungewünschte Bewegungen der Verbraucher der Arbeitshydraulik verhindert werden, falls bei in den geschlossenen Kreislauf des Fahrantriebs zugeschalteter Arbeitshydraulikpumpe eine Versorgung eines Verbrauchers der Arbeitshydraulik erfolgen soll und der Lastdruck des Verbrauchers der Arbeitshydraulik unterhalb des Druckniveaus des geschlossenen Kreislaufs des Fahrantriebs ist.

Gemäß einer Weiterbildung der Erfindung ist in den Druckmittelleitungen des geschlossenen Kreislaufs jeweils ein Bremsventil angeordnet, wobei in der Verbindungsstellung der Steuerventileinrichtung die Förderleitung der Arbeitshydraulikpumpe mit der hochdruckseitigen Druckmittelleitung des hydrostatischen Fahrantriebs zwischen der Fahrpumpe und dem Bremsventil verbindbar ist und die Ansaugleitung der Arbeitshydraulikpumpe mit der niederdruckseitigen Druckmittelleitung des hydrostatischen Fahrantriebs zwischen dem Bremsventil und der Fahrpumpe verbindbar ist. Mit den Bremsventilen kann im Bremsbetrieb der Arbeitsmaschine ein unzulässiger Drehzahlanstieg des Antriebsmotors verhindert werden. Zudem wird durch die Bremsventile die in den geschlossenen Kreislauf des Fahrantriebs zugeschaltete Arbeitshydraulikpumpe an der Ansaugseite auf einfache Weise vor zu hohen Drücken geschützt.

Gemäß einer Weiterbildung der Erfindung ist in der Ansaugzweigleitung ein Druckabsicherungsventil angeordnet. Hierdurch kann bei einer Ausführungsform des Fahrantriebs, bei dem in den Druckmittelleitungen des geschlossenen Kreislaufs keine Bremsventile angeordnet sind, die dem Fahrantrieb zugeschaltete Arbeitshydraulikpumpe an der Ansaugseite auf einfache Weise vor zu hohen Drücken geschützt werden.

Das Druckabsicherungsventil ist bevorzugt als Druckbegrenzungsventil oder als Retarderventil ausgebildet.

Gemäß einer vorteilhaften Ausführungsform der Erfindung ist in der Förderzweigleitung ein in Richtung zur Förderleitung sperrendes Sperrventil, insbesondere Rückschlagventil, angeordnet. Mit einem derartigen Sperrventil in der zu der Steuerventileinrichtung geführten Förderzweigleitung kann beim Zuschalten der Arbeitshydraulikpumpe in den geschlossenen Kreislauf des Fahrantriebs auf einfache Weise verhindert werden, dass Druckmittel aus dem geschlossenen Kreislauf in die Förderleitung der Arbeitshydraulikpumpe und somit zu den Verbrauchern der Arbeitshydraulik zurückströmt. Ein Rucken der Arbeitsmaschine beim Schalten der Steuerventileinrichtung und beim Zuschalten der Arbeitshydraulikpumpe in den geschlossenen Kreislauf des Fahrantriebs kann hierdurch sicher vermieden werden.

Zweckmäßigerweise ist die Arbeitshydraulikpumpe mittels eines Prioritätsventils zur bevorzugten Versorgung eines hydraulischen Verbrauchers, insbesondere einer hydraulischen Lenkungseinrichtung, vorgesehen.

Die Steuerventileinrichtung kann als Schaltventil oder als Proportionalventil ausgebildet sein.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines Antriebssystems einer erfindungsgemäßen Arbeitsmaschine,
- Figur 2: eine zweite Ausführungsform eines Antriebssystems einer erfindungsgemäßen Arbeitsmaschine,
- Figur 3: eine dritte Ausführungsform eines Antriebssystems einer erfindungsgemäßen Arbeitsmaschine,
- Figur 4: eine vierte Ausführungsform eines Antriebssystems einer erfindungsgemäßen Arbeitsmaschine,
- Figur 5: eine fünfte Ausführungsform eines Antriebssystems einer erfindungsgemäßen Arbeitsmaschine,
- Figur 6: eine sechste Ausführungsform eines Antriebssystems einer erfindungsgemäßen Arbeitsmaschine und
- Figur 7: eine siebte Ausführungsform eines Antriebssystems einer erfindungsgemäßen Arbeitsmaschine.

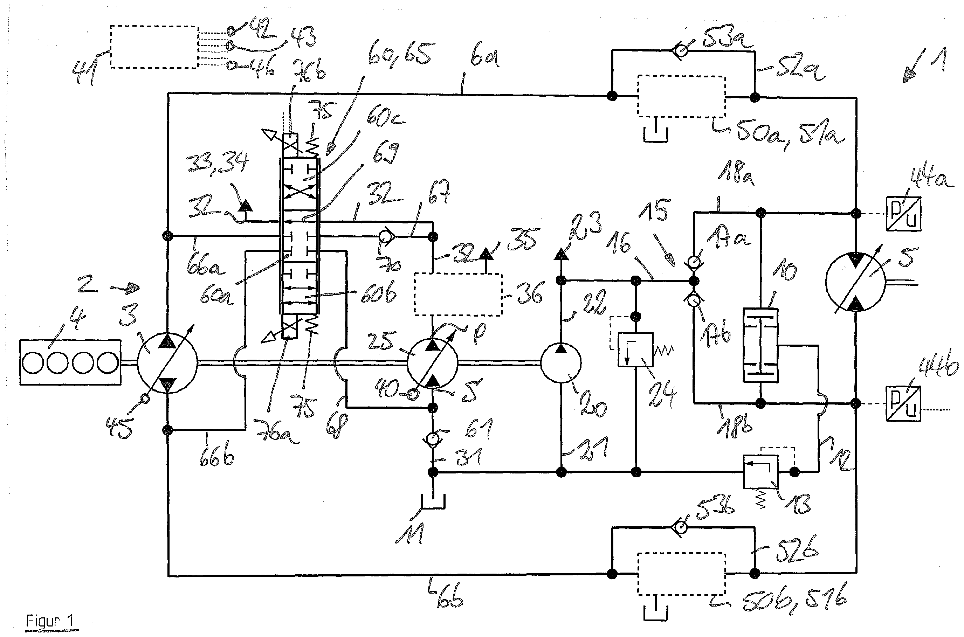

In der Figur 1 ist ein Schaltplan einer ersten Ausführungsform eines hydraulischen Antriebssystems 1 einer erfindungsgemäßen mobilen Arbeitsmaschine dargestellt.

Das Antriebssystem 1 umfasst einen hydrostatischen Fahrantrieb 2. Der hydrostatischen Fahrantrieb 2 umfasst eine Fahrpumpe 3, die von einem Antriebsmotor 4 der Arbeitsmaschine angetrieben ist. Der Antriebsmotor 4 ist als Verbrennungsmotor, beispielsweise Dieselmotor, ausgebildet. Der hydrostatische Fahrantrieb 2 umfasst weiterhin mindestens einen Fahrmotor 5, der zum Antrieb einer Antriebsachse oder eines Antriebsrades der Arbeitsmaschine vorgesehen ist. Der hydrostatische Fahrantrieb 2 ist als geschlossener Kreislauf ausgebildet, der eine erste Druckmittelleitung 6a und eine zweite Druckmittelleitung 6b umfasst. Die erste Druckmittelleitung 6a verbindet einen ersten Anschluss der Fahrpumpe 3 mit einem ersten Anschluss des Fahrmotors 5 und die zweite Druckmittelleitung 6b einen zweiten Anschluss der Fahrpumpe 3 mit einem zweiten Anschluss des Fahrmotors 5. Die Fahrpumpe 3 ist als beidseitig im Verdrängervolumen verstellbare Verstellpumpe ausgebildet. Im dargestellten Ausführungsbeispiel ist der Fahrmotor 5 als im Verdrängervolumen verstellbarer Verstellmotor, beispielsweise einseitig verstellbarer Verstellmotor ausgebildet. Alternativ kann der Fahrmotor 5 als Konstantmotor mit festem Verdrängervolumen ausgebildet sein.

Für die Vorwärtsfahrt der Arbeitsmaschine fördert die Fahrpumpe 3 in die erste Druckmittelleitung 6a, so dass die erste Druckmittelleitung 6a die hochdruckseitige Druckmitteleitung und somit die Hochdruckseite des geschlossenen Kreislaufs bildet und die die zweite Druckmittelleitung 6b die niederdruckseitige Druckmittelleitung und somit die Niederdruckseite des geschlossenen Kreislaufs bildet. Für die Rückwärtsfahrt der Arbeitsmaschine fördert die Fahrpumpe 3 in die zweite Druckmittelleitung 6b, so dass die zweite Druckmittelleitung 6b die hochdruckseitige Druckmittelleitung und somit die Hochdruckseite des geschlossenen Kreislaufs bildet und die die erste Druckmittelleitung 6a die niederdruckseitige Druckmitteleitung und somit die Niederdruckseite des geschlossenen Kreislaufs bildet.

Der geschlossene Kreislauf des Fahrantriebs 2 umfasst ein von den Drücken in den Druckmittelleitung 6a, 6b gesteuertes Ausspeiseventil 10, mit dem die jeweilige niederdruckseitige Druckmittelleitung 6a, 6b des geschlossenen Kreislaufs mit einer zu einem Behälter 11 geführten Ausspeiseleitung 12 verbindbar ist. In der Ausspeiseleitung 12 ist ein Druckbegrenzungsventil 13 angeordnet.

Der geschlossene Kreislauf des Fahrantriebs 2 umfasst weiterhin eine Einspeiseeinrichtung 15. Mit der Einspeiseeinrichtung 15 kann die jeweilige niederdruckseitige Druckmittelleitung 6a, 6b des geschlossenen Kreislaufs mit einer Einspeiseleitung 16 verbunden werden. Die Einspeiseeinrichtung 15 ist im dargestellten Ausführungsbeispiel von einem ersten Sperrventil 17a, beispielsweise einem Rückschlagventil, gebildet, das in einer die Einspeiseleitung 16 mit der ersten Druckmittelleitung 6a verbindenden Verbindungsleitung 18a angeordnet ist, und von einem zweiten Sperrventil 17b, beispielsweise einem Rückschlagventil, gebildet, das in einer die Einspeiseleitung 16 mit der zweiten Druckmittelleitung 6b verbindenden Verbindungsleitung 18b angeordnet ist.

Zur Versorgung der Einspeiseeinrichtung 15 mit Druckmittel ist eine Speisepumpe 20 des Antriebssystems 1 vorgesehen, die zum Antrieb mit dem Antriebsmotor 4 in Verbindung steht. Die Speisepumpe 20 ist als im offenen Kreislauf betriebene Pumpe ausgebildet, die über eine Ansaugleitung 21 Druckmittel aus dem Behälter 11 ansaugt und in eine Förderleitung 22 fördert. Die Förderleitung 22 ist mit der Einspeiseleitung 16 verbunden. An die Förderleitung 22 können noch weitere Verbraucher 23 angeschlossen sein. Zur Absicherung des von der Speisepumpe 20 geförderten Speisedrucks ist der Förderleitung 22 ein Druckbegrenzungsventil 24 zugeordnet.

Das Antriebssystem 1 umfasst weiterhin eine Arbeitshydraulikpumpe 25, die zum Antrieb mit dem Antriebsmotor 4 in Verbindung steht. Die Arbeitshydraulikpumpe 25 ist als im offenen Kreislauf betriebene Pumpe ausgebildet, die mittels einer Ansaugleitung 31 Druckmittel aus dem Behälter 11 ansaugt und das Druckmittel in eine Förderleitung 32 zur Versorgung mindestens eines Verbrauchers 33 einer Arbeitshydraulik 34 der Arbeitsmaschine fördert. Die Ansaugleitung 31 ist hierzu mit einer Ansaugseite S der Arbeitshydraulikpumpe 25 verbunden. Die Förderleitung 32 ist mit einer Förderseite P der Arbeitshydraulikpumpe 25 verbunden.

In dem Ausführungsbeispiel der Figur 1 dient die Arbeitshydraulikpumpe 25 weiterhin zur Versorgung eines bevorzugten hydraulischen Verbrauchers 35, beispielsweise einer hydraulischen Lenkungseinrichtung. Um die bevorzugte Versorgung des Verbrauchers 35 sicherzustellen, ist ein Prioritätsventil 36 vorgesehen, das in der Förderleitung 32 der Arbeitshydraulikpumpe 25 angeordnet ist.

Die Arbeitshydraulikpumpe 25 ist als elektrisch in dem Verdrängervolumen verstellbare Verstellpumpe ausgebildet, beispielsweise einseitig verstellbare Verstellpumpe ausgebildet. Die Arbeitshydraulikpumpe 25 weist hierzu eine elektrisch ansteuerbare Stelleinrichtung 40, die zur Ansteuerung mit einer elektronische Steuereinrichtung 41 in Verbindung steht.

Die elektronische Steuereinrichtung 41 steht eingangsseitig mit einem Bedienelement 42 in Verbindung, mit dem der Fahrantrieb 2 gesteuert werden kann, beispielsweise einem Fahrpedal, und Bedienelementen 43, mit denen die Verbraucher 33 der Arbeitshydraulik 34 gesteuert werden können, beispielsweise Joysticks. Im dargestellten Ausführungsbeispiel steht die elektronische Steuereinrichtung 41 weiterhin mit Drucksensoren 44a, 44b in Verbindung, mit denen der Druck in den Druckmittelleitungen 6a, 6b des geschlossenen Kreislaufs des Fahrantriebs 2 erfasst werden kann. Die elektronische Steuereinrichtung 41 steht ausgangsseitig mit einer elektrisch ansteuerbare Stelleinrichtung 45 der Fahrpumpe 3 in Verbindung, mit der das Verdrängervolumen und die Förderrichtung der Fahrpumpe 3 gesteuert werden kann. Eingangsseitig steht die elektronische Steuereinrichtung 41 weiterhin mit einem Lenkwinkelsensor 46 in Verbindung, mit dem die Betätigung eines Lenkrades erfasst werden kann.

In dem Ausführungsbeispiel der Figur 1 ist in den Druckmittelleitungen 6a, 6b des geschlossenen Kreislaufs des Fahrantriebs 2 jeweils ein Druckbegrenzungsventil 50a, 50b und ein Bremsventil 51a, 51b angeordnet. Mit dem Druckbegrenzungsventil 50a, 50b kann in der Antriebsphase des Fahrantriebs 2 der den Fahrmotor 5 antreibende Systemdruck begrenzt werden. Die Bremsventile 51a, 51b dienen dazu, in der Bremsphase des Fahrantriebs 2 den die Fahrpumpe 3 antreibenden Bremsdruck zu begrenzen. An die Druckmittelleitung 6a ist eine das Druckbegrenzungsventil 50a und das Bremsventil 51a umgehende Umgehungsleitung 52a angeschlossen, in der ein in Richtung zur Fahrpumpe 3 sperrendes Sperrventil 53a, beispielsweise ein Rückschlagventil, angeordnet ist. Entsprechend ist an die Druckmittelleitung 6b eine das Druckbegrenzungsventil 50b und das Bremsventil 51b umgehende Umgehungsleitung 52b angeschlossen, in der ein in Richtung zur Fahrpumpe 3 sperrendes Sperrventil 53b, beispielsweise ein Rückschlagventil, angeordnet ist.

Erfindungsgemäß ist eine Steuerventileinrichtung 60 vorgesehen, mittels der die Verbindung der Förderleitung 32 und der Ansaugleitung 31 der Arbeitshydraulikpumpe 25 mit den Druckmittelleitungen 6a, 6b des geschlossenen Kreislaufs des Fahrantriebs 2 steuerbar ist. Die Steuerventileinrichtung 60 weist eine Sperrstellung 60a und mindestens eine Verbindungsstellung 60b, 60c auf. In der Verbindungsstellung 60b, 60c ist die Förderleitung 32 der Arbeitshydraulikpumpe 25 mit der hochdruckseitigen Druckmittelleitung 6a bzw. 6b des hydrostatischen Fahrantriebs 2 verbindbar, so dass der Fördervolumenstrom der Arbeitshydraulikpumpe 25 in die hochdruckseitige Druckmittelleitung 6a bzw. 6b des hydrostatischen Fahrantriebs 2 einspeisbar ist und zur Versorgung des Fahrmotors 5 zur Verfügung steht. In der Verbindungsstellung 60b, 60c ist die Ansaugleitung 31 der Arbeitshydraulikpumpe 25 mit der niederdruckseitigen Druckmittelleitung 6b bzw. 6a des hydrostatischen Fahrantriebs 2 verbindbar. In der Ansaugleitung 31 der Arbeitshydraulikpumpe 25 ist ein in Richtung zum Behälter 11 sperrendes Sperrventil 61, beispielsweise ein Rückschlagventil, angeordnet. Die Zurückführung des Volumenstroms aus der niederdruckseitigen Druckmittelleitung 6b bzw. 6a des hydrostatischen Fahrantriebs 2 in die Ansaugleitung 31 der Arbeitshydraulikpumpe 25 erfolgt zwischen dem Sperrventil 61 und der Ansaugseite S der Arbeitshydraulikpumpe 25.

In der Sperrstellung 60a ist die Verbindung der Förderleitung 32 der Arbeitshydraulikpumpe 25 mit der hochdruckseitigen Druckmittelleitung 6a bzw. 6b des hydrostatischen Fahrantriebs 2 abgesperrt und die Verbindung der Ansaugleitung 31 der Arbeitshydraulikpumpe 25 mit der niederdruckseitigen Druckmittelleitung 6b bzw. 6a des hydrostatischen Fahrantriebs 2 abgesperrt.

Mit der Steuerventileinrichtung 60 kann somit in der Verbindungsstellung 60b bzw. 60c der geschlossene Kreislauf des Fahrantriebs 2 aufgetrennt werden und die Arbeitshydraulikpumpe 25 in den geschlossenen Kreislauf des Fahrantriebs geschaltet werden, so dass der von der Arbeitshydraulikpumpe 25 geförderte Volumenstrom in die hochdruckseitige Druckmittelleitung 6a bzw. 6b des geschlossenen Kreislaufs eingespeist wird. Dem Fahrmotor 5 steht somit die Summe aus dem Förderstrom der Fahrpumpe 3 und dem Förderstrom der Arbeitshydraulikpumpe 25 zur Verfügung. Auf der niederdruckseitigen Druckmittelleitung 6b bzw. des geschlossenen Kreislaufs wird in der Verbindungsstellung 60b bzw. 60c der Steuerventileinrichtung 60 der Volumenstrom wieder getrennt und entsprechen der Verdrängervolumen der Fahrpumpe 3 und der Arbeitshydraulikpumpe 25 beiden Pumpen 3, 25 wieder anteilig zugeführt. Das Zurückführen des Volumenstroms aus der niederdruckseitigen Druckmittelleitung 6b bzw. 6a des Fahrantriebs zur Ansaugseite S der Arbeitshydraulikpumpe 25 erfolgt zwischen der Ansaugseite S der Arbeitshydraulikpumpe 25 und dem Sperrventil 61. Hierdurch wird erzielt, dass die Ansaugseite S der Arbeitshydraulikpumpe 25 mit dem Niederdruckniveau des geschlossenen Kreislaufs des Fahrantriebs 2 betrieben wird.

In dem Ausführungsbeispiel der Figur 1 ist die Steuerventileinrichtung 60 als Dreistellungs-Sechsanschlussventil 65 ausgebildet. Das Ventil 65 ist an einem ersten Anschluss an eine erste Verbindungsleitung 66a angeschlossen, die mit der ersten Druckmittelleitung 6a des geschlossenen Kreislaufs verbunden ist, und an einem zweiten Anschluss an eine zweite Verbindungsleitung 66b angeschlossen, die mit der zweiten Druckmittelleitung 6b des geschlossenen Kreislaufs verbunden ist. An einem dritten Anschluss ist das Steuerventil 65 an eine Förderzweigleitung 67 angeschlossen, die mit der Förderleitung 32 der Arbeitshydraulikpumpe 25 in Verbindung steht. An einem vierten Anschluss ist das Ventil 65 an eine Ansaugzweigleitung 68 angeschlossen, die mit der Ansaugleitung 31 der Arbeitshydraulikpumpe 25 zwischen der Ansaugseite S und dem Sperrventil 61 verbunden ist. An zwei weitere Anschlüsse des Ventils 65 ist die zu der Arbeitshydraulik 34 geführte Förderleitung 32 angeschlossen, wobei das Ventil 65 an diesen beiden Anschlüssen einen Durchflusspfad 69 der Förderleitung 32 der Arbeitshydraulik 34 steuert. Das Ventil 65 weist eine Sperrstellung 60a auf, in der der Durchflusspfad 69 der Förderleitung 32 der Arbeitshydraulik 34 geöffnet ist und die erste Verbindungsleitung 66a, die zweite Verbindungsleitung 66b, die Förderzweigleitung 67 und die Ansaugzweigleitung 68 abgesperrt sind. Das Ventil 65 weist eine erste Verbindungstellung 60b auf, in der der Durchflusspfad 69 der Förderleitung 32 der Arbeitshydraulik 34 absperrt ist und die Förderzweigleitung 67 mit der ersten Verbindungsleitung 66a und somit der ersten Druckmittelleitung 6a und die Ansaugzweigleitung 68 mit der zweiten Verbindungsleitung 66b und somit der zweiten Druckmittelleitung 6b verbunden ist. Das Ventil 65 weist eine zweite Verbindungstellung 60c auf, in der der Durchflusspfad 69 der Förderleitung 32 der Arbeitshydraulik 34 absperrt ist und die Förderzweigleitung 67 mit der zweiten Verbindungsleitung 66b und somit der zweiten Druckmittelleitung 6b und die Ansaugzweigleitung 68 mit der ersten Verbindungsleitung 66a und somit der ersten Druckmittelleitung 6a verbunden ist.

In der Förderzweigleitung 67 ist ein in Richtung zur Förderleitung 32 sperrendes Sperrventil 70, beispielsweise ein Rückschlagventil, angeordnet.

Beim Schalten der Steuerventileinrichtung 60 verhindert das in der Förderzweigleitung 67 angeordnete Sperrventil 70 ein Rückströmen von Druckmittel aus dem geschlossenen Kreislauf des Fahrantriebs 2 zur Arbeitshydraulik 34, wodurch ein Rucken der Arbeitsmaschine beim Schalten der Steuerventileinrichtung 60 verhindert wird.

In der Sperrstellung 60a ist somit die Arbeitshydraulikpumpe 25 von dem geschlossenen Kreislauf des hydrostatischen Fahrantriebs 2 getrennt und der Fördervolumenstrom der Arbeitshydraulikpumpe 25 steht über den Durchflusspfad 69 vollständig den Verbrauchern 33 der Arbeitshydraulik 34 zur Verfügung. In der ersten Verbindungsstellung 60b fördert die Arbeitshydraulikpumpe 25 in die erste Druckmittelleitung 6a, die in der Vorwärtsfahrt der Arbeitsmaschine die hochdruckseitige Druckmittelleitung des geschlossenen Kreislaufs bildet. In der Vorwärtsfahrt der Arbeitsmaschine bildet die zweite Druckmittelleitung 6b die niederdruckseitige Druckmittelleitung des geschlossenen Kreislaufs, die in der ersten Verbindungsstellung 60b mit der Ansaugseite S der Arbeitshydraulikpumpe 25 verbunden ist. In der zweiten Verbindungsstellung 60c fördert die Arbeitshydraulikpumpe 25 in die zweite Druckmittelleitung 6b, die in der Rückwärtsfahrt der Arbeitsmaschine die hochdruckseitige Druckmittelleitung des geschlossenen Kreislaufs bildet. In der Rückwärtsfahrt der Arbeitsmaschine bildet die erste Druckmittelleitung 6a die niederdruckseitige Druckmittelleitung des geschlossenen Kreislaufs, die in der zweiten Verbindungsstellung 60c mit der Ansaugseite S der Arbeitshydraulikpumpe 25 verbunden ist. In den Verbindungsstellungen 60b, 60c erfolgt somit die Verbindung der Arbeitshydraulikpumpe 25 mit den Druckmittelleitungen 6a, 6b des geschlossenen Kreislaufs des Fahrantriebs 2, so dass entsprechen der Fahrsituation (Vorwärtsfahrt bzw. Rückwärtsfahrt) die hochdruckseitige Druckmittelleitung des geschlossenen Kreislaufs mit der Förderseite P der Arbeitshydraulikpumpe 25 verbunden ist und die niederdruckseitige Druckmittelleitung des geschlossenen Kreislaufs mit der Ansaugseite S der Arbeitshydraulikpumpe 25 verbunden ist.

Bei dem Ventil 65 der Figur 1 ist in den Verbindungsstellungen 60b, 60c durch den abgesperrten Durchflusspfad 69 keine Versorgung der Verbraucher 33 der Arbeitshydraulik 34 möglich.

In der Figur 1 ist das Prioritätsventil 36 in der Förderleitung 32 stromauf des Anschlusses der Förderzweigleitung 67 an die Förderleitung 32 angeordnet, so dass eine bevorzugte Versorgung des Verbrauchers 35 in allen Stellungen 60a, 60b, 60c des Ventils 65 ermöglicht wird.

Die Steuerventileinrichtung 60 ist elektrisch betätigbar und steht zur Ansteuerung mit der elektronischen Steuereinrichtung 41 in Verbindung steht. Die Steuerventileinrichtung 60 ist mittels einer Federeinrichtung 75 in die Sperrstellung 60a betätigt und mittels elektrischen Betätigungseinrichtungen 76a, 76b, beispielsweise Magneten, die mit der elektronischen Steuereinrichtung 41 in Verbindung stehen, in die Verbindungsstellungen 60b, 60c betätigbar.

Von der elektronischen Steuereinrichtung 41 wird oberhalb einer Grenzfahrgeschwindigkeit und somit bei höheren Fahrgeschwindigkeiten der Arbeitsmaschine durch Betätigen der Steuerventileinrichtung 60 in die Verbindungsstellung 60b bzw. 60c die Arbeitshydraulikpumpe 25 dem geschlossenen Kreislauf des Fahrantriebs 2 zugeschaltet. Die Arbeitshydraulikpumpe 25 ist in den Verbindungsstellungen 60b bzw. 60c der Steuerventileinrichtung 60 Teil des geschlossenen Kreislaufs des Fahrantriebs 2. Sofern das maximale Druckniveau der Arbeitshydraulikpumpe 25 niedriger als der maximale Druckniveau des Fahrantriebs 2 ist, wird hierdurch ermöglicht, dass nur bei höheren Fahrgeschwindigkeiten, bei denen das Druckniveau des Fahrantriebs 1 dem Druckniveau der Arbeitshydraulikpumpe 25 entspricht, die Arbeitshydraulikpumpe 25 dem Fahrantrieb 2 zugeschaltet wird. Unterhalb der Grenzfahrgeschwindigkeit und somit bei niederen Fahrgeschwindigkeiten ist die Steuerventileinrichtung 60 in die Sperrstellung 60a betätigt, so dass die Arbeitshydraulikpumpe 25 von dem geschlossenen Kreislauf getrennt ist und im offenen Kreislauf betrieben ist, in dem die Arbeitshydraulikpumpe 25 Druckmittel aus dem Behälter 11 ansaugt und in die Förderleitung 32 fördert.

Die elektronische Steuereinrichtung 41 steuert hierbei mittels der Steuerventileinrichtung 60 in Abhängigkeit von den Eingangssignalen (Fahrpedal 42, Bedienelemente 43, Drucksensoren 44a, 44b) und somit in Abhängigkeit von der aktuellen Fahrsituation der Arbeitsmaschine die Trennung und die Verbindung der Arbeitshydraulikpumpe 25 mit dem geschlossenen Kreislauf des Fahrantriebs 2.

Beim Zuschalten der Arbeitshydraulikpumpe 25 in den geschlossenen Kreislauf des Fahrantriebs 2 wird von der elektronischen Steuereinrichtung 41 das Verdrängervolumen der Arbeitshydraulikpumpe 25 auf einen Wert unterhalb des maximalen Verdrängervolumens der Arbeitshydraulikpumpe 25 begrenzt. Sofern bei der Figur 1 bei zugeschalteter Arbeitshydraulikpumpe 25 eine Betätigung der Lenkungseinrichtung 35 erfolgt, welche von der elektronischen Steuereinrichtung 41 anhand der Betätigung des Lenkwinkelsensors 46 erfasst werden kann, wird von der elektronischen Steuereinrichtung 41 durch Ansteuerung der Stelleinrichtung 40 das Verdrängervolumen der Arbeitshydraulikpumpe 25 entsprechend erhöht, um die Lenkungseinrichtung 35 mit Druckmittel versorgen zu können.

In der Figur 1 ist in den Verbindungsstellungen 60b, 60c der Steuerventileinrichtung 60 keine Betätigung der Verbraucher 33 der Arbeitshydraulik 34 möglich.

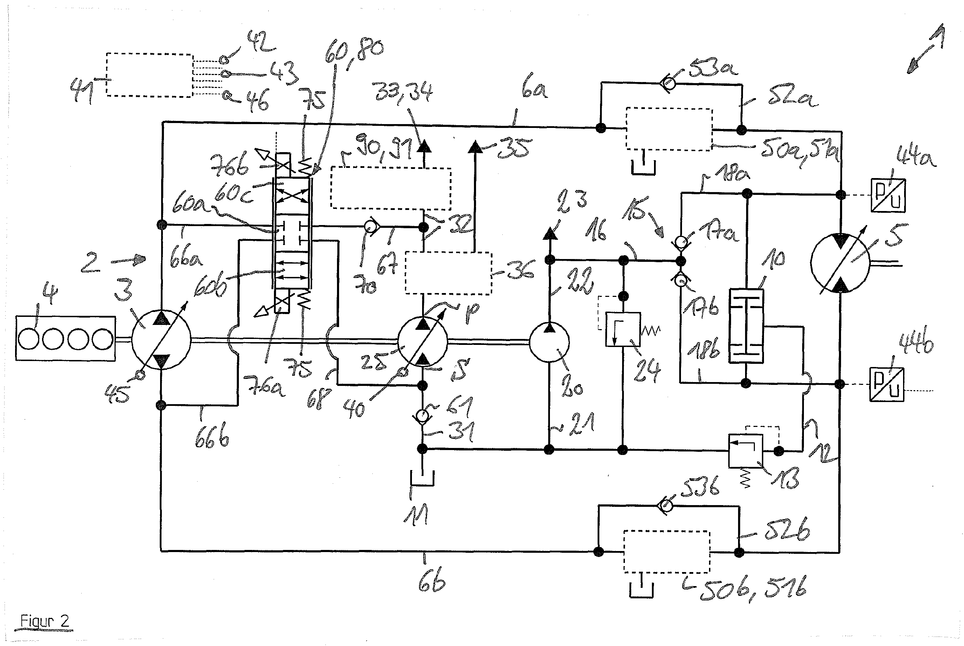

In der Figur 2 ist ein Schaltplan einer zweiten Ausführungsform eines hydraulischen Antriebssystems 1 einer erfindungsgemäßen mobilen Arbeitsmaschine dargestellt. Mit der Figur 1 gleiche Bauteile sind mit gleichen Bezugsziffern versehen.

Die Figur 2 unterscheidet sich von der Figur 1 durch die Ausführung der Steuerventileinrichtung 60.

In dem Ausführungsbeispiel der Figur 2 ist die Steuerventileinrichtung 60 als Dreistellungs-Vieranschlussventil 80 ausgebildet ist. Das Ventil 80 ist an einem ersten Anschluss an die erste Verbindungsleitung 66a angeschlossen, die mit der ersten Druckmittelleitung 6a des geschlossenen Kreislaufs verbunden ist, und an einem zweiten Anschluss an die zweite Verbindungsleitung 66b angeschlossen, die mit der zweiten Druckmittelleitung 6b des geschlossenen Kreislaufs verbunden ist. An einem dritten Anschluss ist das Steuerventil 65 an die Förderzweigleitung 67 angeschlossen, die mit der zu der Arbeitshydraulik 34 geführte Förderleitung 32 der Arbeitshydraulikpumpe 25 in Verbindung steht. An einem vierten Anschluss ist das Ventil 65 an die Ansaugzweigleitung 68 angeschlossen, die mit der Ansaugleitung 31 der Arbeitshydraulikpumpe 25 zwischen der Ansaugseite S und dem Sperrventil 61 verbunden ist. Das Ventil 80 weist eine Sperrstellung 60a auf, in der die erste Verbindungsleitung 66a, die zweite Verbindungsleitung 66b, die Förderzweigleitung 67 und die Ansaugzweigleitung 68 abgesperrt sind. Das Ventil 65 weist eine erste Verbindungstellung 60b auf, in der die Förderzweigleitung 67 mit der ersten Verbindungsleitung 66a und somit der ersten Druckmittelleitung 6a und die Ansaugzweigleitung 68 mit der zweiten Verbindungsleitung 66b und somit der zweiten Druckmittelleitung 6b verbunden ist. Das Ventil 65 weist eine zweite Verbindungstellung 60c auf, in der die Förderzweigleitung 67 mit der zweiten Verbindungsleitung 66b und somit der zweiten Druckmittelleitung 6b und die Ansaugzweigleitung 68 mit der ersten Verbindungsleitung 66a und somit der ersten Druckmittelleitung 6a verbunden ist.

Bei der Figur 2 ist in der Förderleitung 32 der Arbeitshydraulikpumpe 25, die zu den Verbrauchern 33 der Arbeitshydraulik 34 geführt ist, stromab des Anschlusses der Förderzweigleitung 67 eine Stauventileinrichtung 90 angeordnet, mittels der der Volumenstrom der Arbeitshydraulikpumpe 25 zu dem Verbraucher 33 der Arbeitshydraulik 34 androsselbar ist.

Die Stauventileinrichtung 90 ist elektrisch betätigbar und steht zur Ansteuerung mit der elektronischen Steuereinrichtung 41 in Verbindung. In der Figur 2 ist die Stauventileinrichtung 90 als Retarderventil 91 ausgebildet.

In der Sperrstellung 60a des Ventils 80 ist die Arbeitshydraulikpumpe 25 von dem geschlossenen Kreislauf des hydrostatischen Fahrantriebs 2 getrennt und der Fördervolumenstrom der Arbeitshydraulikpumpe 25 steht über Förderleitung 32 vollständig den Verbrauchern 33 der Arbeitshydraulik 34 zur Verfügung. Um den Fördervolumenstrom der Arbeitshydraulikpumpe 25 dem Fahrmotor 3 zur Verfügung zu stellen, wird bei der Figur 2 mittels der Stauventileinrichtung 90 die Förderleitung 32 und somit der Pfad von der Arbeitshydraulikpumpe 25 zu den Verbrauchern 33 der Arbeitshydraulik 34 angedrosselt, so dass für ein Zuschalten der Arbeitshydraulikpumpe 25 in den geschlossenen Kreislauf des Fahrantriebs 2 in den Verbindungsstellungen 60b, 60c des Ventils 80 das Druckniveau in der zulaufseitigen Druckmittelleitung 6a, 6b des geschlossenen Kreislaufs des Fahrantriebs 2 erreicht werden kann.

Bei höheren Fahrgeschwindigkeiten, bei denen die Arbeitshydraulikpumpe 25 dem geschlossenen Kreislauf des Fahrantriebs 2 zugeschalten wird, ist der Volumenstrombedarf der Lenkungseinrichtung 35 und der Verbraucher 33 der Arbeitshydraulik 34 gering. Um den Volumenstrombedarf für die Lenkungseinrichtung 35 und die Verbraucher 33 der Arbeitshydraulik 34 vorzuhalten, wird von der elektronischen Steuereinrichtung 41 beim Zuschalten der Arbeitshydraulikpumpe 25 in den geschlossenen Kreislauf des Fahrantriebs 2 das Verdrängervolumen der Arbeitshydraulikpumpe 25 auf einen Wert unterhalb des maximalen Verdrängervolumens der Arbeitshydraulikpumpe 25 begrenzt und somit nur eine definierte Teilmenge des maximalen Förderstroms der Arbeitshydraulikpumpe 25 zur Unterstützung der Fahrpumpe 3 bereitgestellt. Die Arbeitshydraulikpumpe 25 wird mittels der elektronischen Steuereinrichtung 41 auf dieser Teilmenge gehalten. Sofern bei der Figur 2 bei zugeschalteter Arbeitshydraulikpumpe 25 eine Betätigung der Lenkungseinrichtung 35 oder der Verbraucher der Arbeitshydraulik 34 erfolgt, welche von der elektronischen Steuereinrichtung 41 anhand der Betätigung des Lenkwinkelsensors 46 oder der Bedienelemente 43 erfasst werden kann, wird von der elektronischen Steuereinrichtung 41 durch Ansteuerung der Stelleinrichtung 40 das Verdrängervolumen der Arbeitshydraulikpumpe 25 entsprechend dem durch die Betätigung der Lenkungseinrichtung 35 oder der Verbraucher 33 angeforderten Förderstrombedarf erhöht, so dass bei Bedarf die Fördermenge entsprechend dem über den Lenkwinkelsensors 46 bzw. die Bedienelemente 43 geforderte Fördermengenbedarf elektronisch über eine entsprechende Erhöhung des Verdrängervolumens der Arbeitshydraulikpumpe 25 zusätzlich bereitgestellt wird.

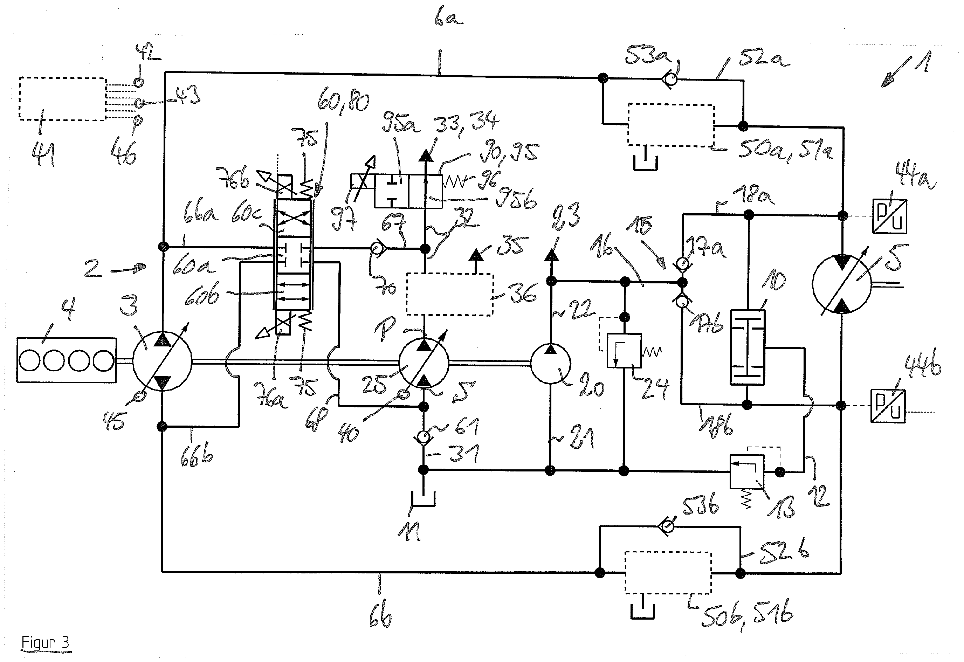

In der Figur 3 ist ein Schaltplan einer dritten Ausführungsform eines hydraulischen Antriebssystems 1 einer erfindungsgemäßen mobilen Arbeitsmaschine dargestellt. Mit den Figuren 1 und 2 gleiche Bauteile sind mit gleichen Bezugsziffern versehen.

Die Figur 3 unterscheidet sich von der Figur 2 durch die Ausführung der Stauventileinrichtung 90.

In der Figur 3 ist die Stauventileinrichtung 90 als Schaltventil 95 mit einer Sperrstellung 95a und einer Öffnungsstellung 95b ausgebildet. In der Figur 3 ist die Stauventileinrichtung 90 analog der Figur 2 in der Förderleitung 32 der Arbeitshydraulikpumpe 25, die zu den Verbrauchern 33 der Arbeitshydraulik 34 geführt ist, stromab des Anschlusses der Förderzweigleitung 67 angeordnet. Das Schaltventil 95 ist elektrisch betätigbar und steht zur Ansteuerung mit der elektronischen Steuereinrichtung 41 in Verbindung. Das Schaltventil 95 ist in dem dargestellten Ausführungsbeispiel mittels einer Feder 96 in die Öffnungsstellung 95b und mittels einer elektrischen Betätigungseinrichtung 97, beispielsweise eines Magneten, der mit der elektronischen Steuereinrichtung 41 in Verbindung steht, in die Sperrstellung 95a betätigbar.

Mit der als Schaltventil 95 ausgebildeten Stauventileinrichtung 90 kann in der Öffnungsstellung 95b bei niedrigen Fahrgeschwindigkeiten, in denen das Ventil 80 in die Sperrstellung 60a betätigt ist, eine Versorgung der Verbraucher 33 der Arbeitshydraulik 34 erzielt werden. Für ein Zuschalten der Arbeitshydraulikpumpe 25 in den geschlossenen Kreislauf des Fahrantriebs 2 bei höheren Fahrgeschwindigkeiten in den Verbindungsstellungen 60b, 60c des Ventils 80 wird das Schaltventil 95 in die Sperrstellung 95a betätigt, so dass die Verbraucher 33 der Arbeitshydraulik 34 von der Arbeitshydraulikpumpe 25 vollständig getrennt sind und das Druckniveau in der zulaufseitigen Druckmittelleitung 6a, 6b des geschlossenen Kreislaufs des Fahrantriebs 2 erreicht werden kann. Mit dem Schaltventil 95 können in der Sperrstellung 95a und der Trennfunktion der Verbraucher 33 der Arbeitshydraulik 34 von der Arbeitshydraulikpumpe 25 bei mit dem geschlossenen Kreislauf des Fahrantriebs 2 verbundener Arbeitshydraulikpumpe 25 Umlaufverluste vermieden werden, die entstehen, wenn ein von der Arbeitshydraulikpumpe 25 überschüssig geförderter Volumenstrom über eine nicht näher dargestellte Umlaufdruckwaage der Arbeitshydraulik 34 zu dem Behälter 11 abgeführt wird.

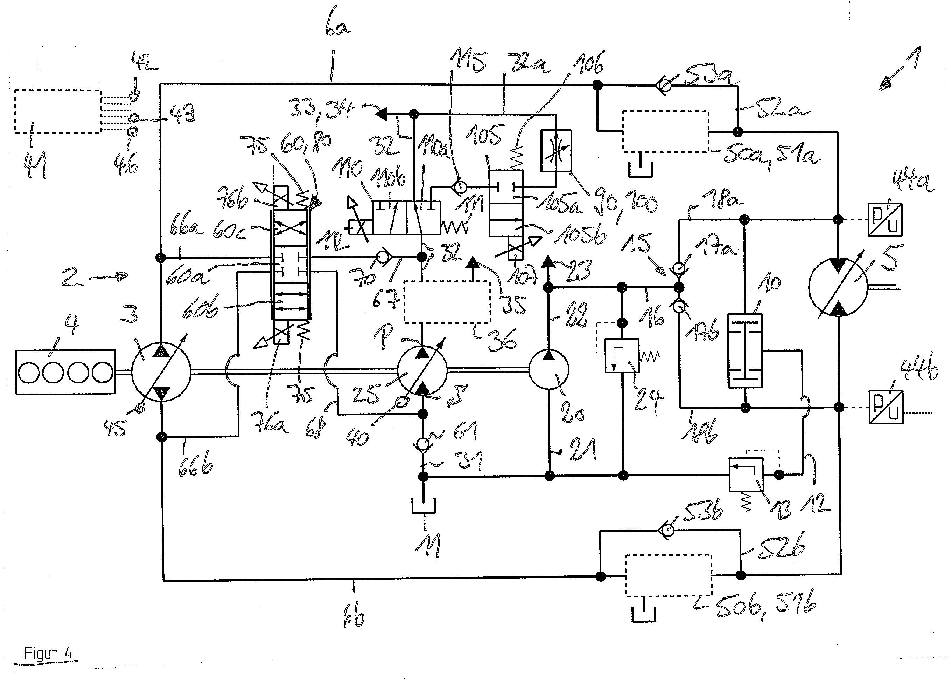

In den Figuren 4 bis 6 ist jeweils ein Schaltplan einer weiteren Ausführungsform eines hydraulischen Antriebssystems 1 einer erfindungsgemäßen mobilen Arbeitsmaschine dargestellt. Mit den Figuren 1 bis 3 gleiche Bauteile sind mit gleichen Bezugsziffern versehen.

Die Figuren 4 bis 6 unterscheiden sich von den Figuren 2 und 3 durch die Ausführung der Stauventileinrichtung 90.

In den Figuren 4 bis 6 weist die Stauventileinrichtung 60 einen Volumenstromregler 100 auf, der mittels eines elektrisch betätigten Schaltventils 105 zu- und abschaltbar ist. Das Schaltventil 105 weist eine Sperrstellung 105a und eine Öffnungsstellung 105b auf. Das Schaltventil 105 ist elektrisch betätigbar und steht zur Ansteuerung mit der elektronischen Steuereinrichtung 41 in Verbindung. Das Schaltventil 105 ist in den dargestellten Ausführungsbeispielen der Figuren 4 bis 6 mittels einer Feder 106 in die Sperrstellung 105b bzw. die Öffnungsstellung 105a und mittels einer elektrischen Betätigungseinrichtung 107, beispielsweise eines Magneten, der mit der elektronischen Steuereinrichtung 41 in Verbindung steht, in die Öffnungsstellung 105b bzw. die Sperrstellung 105b betätigbar.

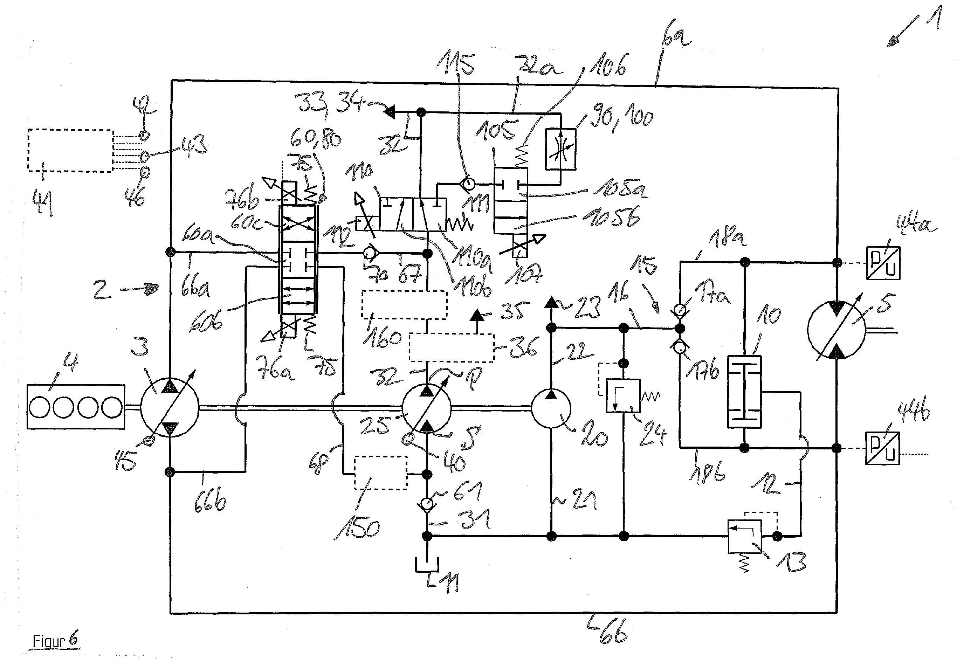

In den Figuren 4 und 6 ist der Volumenstromregler 100 und das Schaltventil 105 in einer der Förderleitung 32 parallel geschalteten Zweigleitung 32a angeordnet, die mit der Förderleitung 32 stromab des Anschlusses der Förderzweigleitung 37 verbindbar ist. Mittels eines Umschaltventils 110 kann die Förderseite P der Arbeitshydraulikpumpe 25 entweder mittels der Förderleitung 32 direkt mit den Verbrauchern 33 der Arbeitshydraulik 34 verbunden werden oder über die Zweigleitung 32a mit den Verbrauchern 33 der Arbeitshydraulik 34 verbunden werden. Das Umschaltventil 110 steht hierzu eingangsseitig mit dem mit der Förderseite P der Arbeitshydraulikpumpe 25 verbundenen Abschnitt der Förderleitung 32 und ausgangsseitig mit der Zweigleitung 32a sowie dem mit den Verbrauchern 33 der Arbeitshydraulik 34 verbundenen Abschnitt der Förderleitung 32 in Verbindung. In einer ersten Schaltstellung 110a öffnet das Umschaltventil 110 die Förderleitung 32 und sperrt die Verbindung zur Zweigleitung 32a ab. In einer zweiten Schaltstellung 110b sperrt das Umschaltventil 110 die Förderleitung 32 ab und öffnet die Verbindung zur Zweigleitung 32a. Das Umschaltventil 110 ist elektrisch betätigbar und steht zur Ansteuerung mit der elektronischen Steuereinrichtung 41 in Verbindung. Das Umschaltventil 110 ist in den dargestellten Ausführungsbeispielen der Figuren 4 und 6 mittels einer Feder 111 in die erste Schaltstellung 110a beaufschlagt und mittels einer elektrischen Betätigungseinrichtung 112, beispielsweise eines Magneten, der mit der elektronischen Steuereinrichtung 41 in Verbindung steht, in die zweite Schaltstellung 110b betätigbar.

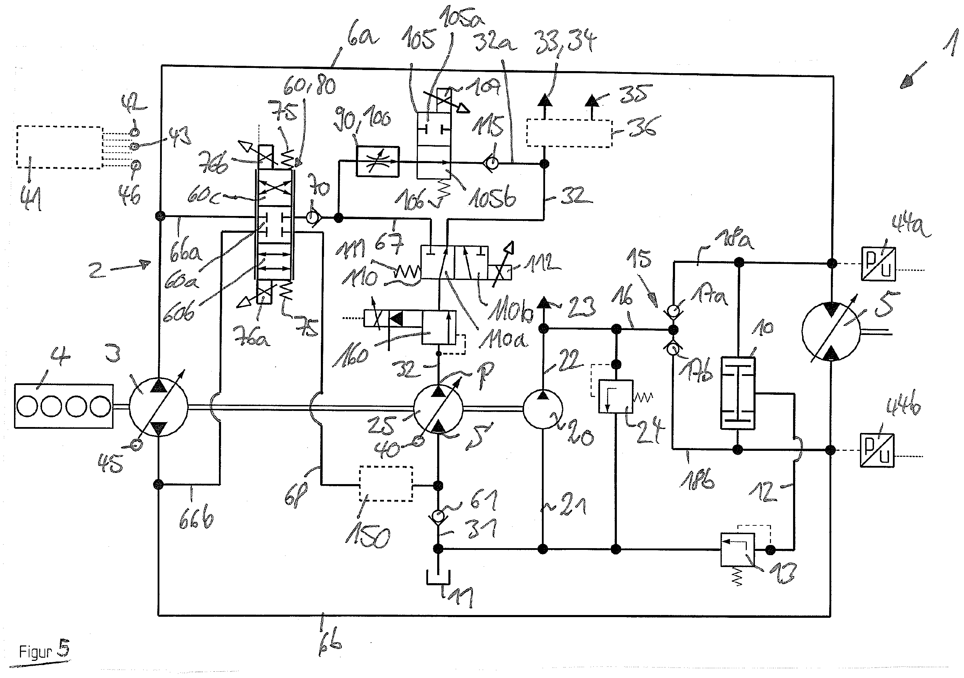

In der Figur 5 ist der Volumenstromregler 100 und das Schaltventil 105 in einer Zweigleitung 32a angeordnet, die von der Förderzweigleitung 67 zu der Förderleitung 32 geführt ist. Mittels eines Umschaltventils 110 kann die Förderseite P der Arbeitshydraulikpumpe 25 entweder mit der Förderleitung 32 oder mit der Förderzweigleitung 37 verbunden werden. Das Umschaltventil 110 steht hierzu eingangsseitig mit dem mit der Förderseite P der Arbeitshydraulikpumpe 32 verbundenen Abschnitt der Förderleitung 32 und ausgangsseitig mit der Förderzweigleitung 67 sowie dem mit den Verbrauchern 33 der Arbeitshydraulik 34 verbundenen Abschnitt der Förderleitung 32 in Verbindung. In einer ersten Schaltstellung 110a öffnet das Umschaltventil 110 die Förderleitung 32 und sperrt die Verbindung zur Förderzweigleitung 67 ab. In einer zweiten Schaltstellung 110b sperrt das Umschaltventil 110 die direkte Verbindung der Förderleitung 32 zu den Verbrauchern 33 ab und öffnet die Verbindung zur Förderzweigleitung 37. Das Umschaltventil 110 ist elektrisch betätigbar und steht zur Ansteuerung mit der elektronischen Steuereinrichtung 41 in Verbindung. Das Umschaltventil 110 ist in dem dargestellten Ausführungsbeispiels der Figur 5 mittels einer Feder 111 in die erste Schaltstellung 110a beaufschlagt und mittels einer elektrischen Betätigungseinrichtung 112, beispielsweise eines Magneten, der mit der elektronischen Steuereinrichtung 41 in Verbindung steht, in die zweite Schaltstellung 110b betätigbar.

In der Zweigleitung 32a ist ein in Richtung zu dem Verbraucher 33 der Arbeitshydraulik 34 öffnendes Sperrventil 115, beispielsweise ein Rückschlagventil, angeordnet.

In den Figuren 4 bis 6 ist bei niedrigen Fahrgeschwindigkeiten, in denen das Steuerventileinrichtung 60 in die Sperrstellung 60a betätigt ist, das Umschaltventil 110 in die erste Schaltstellung 110a betätigt, so dass der Verbraucher 33 der Arbeitshydraulik 34 mit dem vollen Förderstrom der Arbeitshydraulikpumpe 25 versorgt werden können. Ist in den Steuerstellungen 60b, 60c der Steuerventileinrichtung 60 die Arbeitshydraulikpumpe 25 mit dem geschlossenen Kreislaufs des Fahrantriebs verbunden, wird das Umschaltventil 100 in die zweite Schaltstellung 110b betätigt. Sofern hierbei eine Ansteuerung eines Verbrauchers 33 der Arbeitshydraulik 34 erfolgt, die von der elektronischen Steuereinrichtung 41 anhand der Betätigung des Bedienelements 43 erfasst werden kann, wird von der elektronischen Steuereinrichtung 41 das Schaltventil 105 in die Öffnungsstellung 105b betätigt, so dass eine Versorgung des Verbrauchers 33 der Arbeitshydraulik 34 mit dem an dem Volumenstromregler 100 definierten Volumenstrom ermöglicht wird.

In den Figuren 4 bis 6 ist bei in den geschlossenen Kreislauf des Fahrantriebs 2 zugeschalteter Arbeitshydraulikpumpe 25 eine Versorgung der Verbraucher 33 der Arbeitshydraulik 34 mit einem an dem Volumenstromregler 100 definierten Förderstrom möglich. An den Verbrauchern 33 der Arbeitshydraulik 34 können hierbei Korrekturen durchgeführt werden. Das Schaltventil 105 ermöglicht es hierbei, diesen Förderstrom über den Stromregler 100 bedarfsgemäß bei einer Anforderung durch einen Verbraucher 33 der Arbeitshydraulik 34 zu schalten. Hierdurch können Verluste durch überschüssige Volumenströme, die an einer Umlaufdruckwaage der Arbeitshydraulik 34 zu dem Behälter 11 abgeführt werden, vermieden werden. Wird ein Bedienelement 43 für die Betätigung eines Verbrauchers 33 der Arbeitshydraulik 34 betätigt, detektiert die elektronische Steuereinrichtung 41 den Korrekturwunsch des Verbrauchers 33 der Arbeitshydraulik 34 und erhöht entsprechend des Volumenstrombedarfs des Verbrauchers 33 das Verdrängervolumen der Arbeitshydraulikpumpe 25 und betätigt das Schaltventil 105 bei in die Schaltstellung 110b betätigtem Umschaltventil 110 in die Öffnungsstellung 105b. In den Figuren 4 bis 6 ist der von der Arbeitshydraulikpumpe 25 dem geschlossenen Kreislauf des Fahrantriebs 2 zugeführte Förderstrom um den an dem Volumenstromregler 100 definierten Förderstrom unterhalb des maximalen Verdrängervolumens der Arbeitshydraulikpumpe 25 zu begrenzen, um die zusätzliche Versorgung der Verbraucher 33 der Arbeitshydraulik 34 im Bedarfsfall mit dem an dem Volumenstromregler 100 definierten Förderstrom zu ermöglichen. Das Sperrventil 115 in den Figuren 4 bis 6 verhindert hierbei ein ungewünschte Bewegung der Verbraucher 33 der Arbeitshydraulik 34 bei in der Öffnungsstellung 105b befindlichem Schaltventil 105 für den Fall, das der Lastdruck des Verbrauchers 33 der Arbeitshydraulik 34 unterhalb des aktuellen Drucks des Fahrantriebs 2 ist.

In den Figuren 1 bis 4 ist in den Druckmittelleitungen 6a, 6b des geschlossenen Kreislaufs jeweils die Bremsventileinrichtung 51a, 51b angeordnet. In den Verbindungsstellungen 60b, 60c der Steuerventileinrichtung 60 ist hierbei die Förderleitung 32 der Arbeitshydraulikpumpe 25 mit der hochdruckseitigen Druckmittelleitung 6a bzw. 6b des hydrostatischen Fahrantriebs 2 zwischen der Fahrpumpe 3 und dem Bremsventil 51a bzw. 51b verbindbar ist und die Ansaugleitung 31 der Arbeitshydraulikpumpe 25 mit der niederdruckseitigen Druckmittelleitung 6b bzw. 6a des hydrostatischen Fahrantriebs 2 zwischen dem Bremsventil 51b bzw. 51a und der Fahrpumpe 3 verbindbar ist. Die erste Verbindungsleitung 66a ist hierzu an die Druckmittelleitung 6a des hydrostatischen Fahrantriebs 2 zwischen der Fahrpumpe 3 und dem Bremsventil 51a angeschlossen. Entsprechend ist die zweite Verbindungsleitung 66b an die Druckmittelleitung 6b des hydrostatischen Fahrantriebs 2 zwischen der Fahrpumpe 3 und dem Bremsventil 51b angeschlossen. In den Verbindungsstellungen 60b, 60c der Ventileinrichtung 60 ist hierbei die Ansaugseite S der Arbeitshydraulikpumpe 25 über das entsprechende Bremsventil 51a bzw. 51b vor zu hohen Drücken geschützt.

In dem Ausführungsbeispiel der Figur 5 und der Figur 6 sind in den Druckmittelleitungen 6a, 6b des geschlossenen Kreislaufs des Fahrantriebs 2 keine Bremsventile angeordnet. Um in den Verbindungsstellungen 60b, 60c der Steuerventileinrichtung 60 die Ansaugseite S der Arbeitshydraulikpumpe 25 vor zu hohen Drücken zu schützen, ist in der Ansaugzweigleitung 68 ein Druckabsicherungsventil 150 angeordnet ist.

Das Druckabsicherungsventil 150 kann als Druckbegrenzungsventil, beispielsweise fest eingestelltes Druckbegrenzungsventil, oder als elektrisch verstellbares Retarderventil, insbesondere elektrisch proportional verstellbares Retarderventil, das zur Ansteuerung mit der elektronischen Steuereinrichtung 41 in Verbindung steht, ausgebildet sein.

In den Figuren 1 bis 4 wird in der Bremsphase des Fahrantriebs 2 an den Bremsventilen 51a, 51b Bremsenergie in Wärme umgewandelt. Um in der Figur 5 und der Figur 6 in der Bremsphase des Fahrantriebs 2 durch einen Pumpenbetrieb der Arbeitshydraulikpumpe 25 Bremsenergie aufnehmen zu können, ist in der Förderleitung 32 der Arbeitshydraulikpumpe 25 ein Retarderventil 160 angeordnet. In der Figur 5 ist das Retarderventil 150 als elektrisch verstellbares Retarderventil, insbesondere elektrisch proportional verstellbares Retarderventil, ausgebildet, das zur Ansteuerung mit der elektronischen Steuereinrichtung 41 in Verbindung steht.

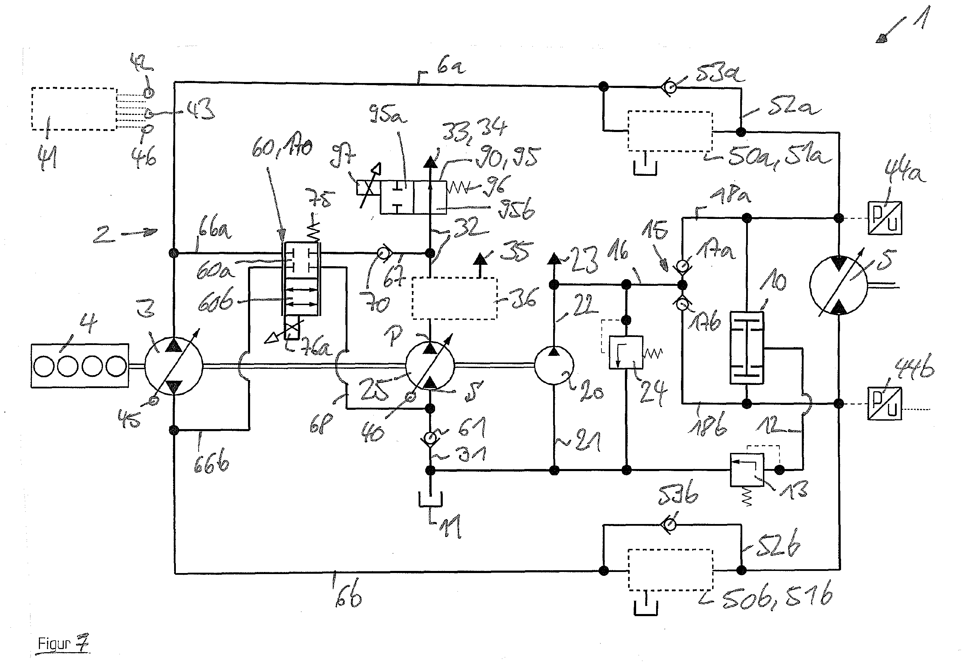

In der Figur 7 ist ein Schaltplan einer weiteren Ausführungsform eines hydraulischen Antriebssystems 1 einer erfindungsgemäßen mobilen Arbeitsmaschine dargestellt. Mit den Figuren 1 bis 6 gleiche Bauteile sind mit gleichen Bezugsziffern versehen.

Die Figur 7 unterscheidet sich von den Figuren 1 bis 6 durch die Ausführung der Steuerventileinrichtung 60.

In dem Ausführungsbeispiel der Figur 7 ist die Steuerventileinrichtung 60 als Zweistellungs-Vieranschlussventil 170 ausgebildet ist. Das Ventil 170 ist an einem ersten Anschluss an die erste Verbindungsleitung 66a angeschlossen, die mit der ersten Druckmittelleitung 6a des geschlossenen Kreislaufs verbunden ist, und an einem zweiten Anschluss an die zweite Verbindungsleitung 66b angeschlossen, die mit der zweiten Druckmittelleitung 6b des geschlossenen Kreislaufs verbunden ist. An einem dritten Anschluss ist das Steuerventil 65 an die Förderzweigleitung 67 angeschlossen, die mit der zu der Arbeitshydraulik 34 geführten Förderleitung 32 der Arbeitshydraulikpumpe 25 in Verbindung steht. An einem vierten Anschluss ist das Ventil 65 an die Ansaugzweigleitung 68 angeschlossen, die mit der Ansaugleitung 31 der Arbeitshydraulikpumpe 25 zwischen der Ansaugseite S und dem Sperrventil 61 verbunden ist. Das Ventil 170 weist eine Sperrstellung 60a auf, in der die erste Verbindungsleitung 66a, die zweite Verbindungsleitung 66b, die Förderzweigleitung 67 und die Ansaugzweigleitung 68 abgesperrt sind. Das Ventil 170 weist eine Verbindungstellung 60b auf, in der die Förderzweigleitung 67 mit der ersten Verbindungsleitung 66a und somit der ersten Druckmittelleitung 6a und die Ansaugzweigleitung 68 mit der zweiten Verbindungsleitung 66b und somit der zweiten Druckmittelleitung 6b verbunden ist.

Bei der Figur 7 ist in der Förderleitung 32 der Arbeitshydraulikpumpe 25, die zu den Verbrauchern 33 der Arbeitshydraulik 34 geführt ist, stromab des Anschlusses der Förderzweigleitung 67 eine Stauventileinrichtung 90 angeordnet, mittels der der Volumenstrom der Arbeitshydraulikpumpe 25 zu dem Verbraucher 33 der Arbeitshydraulik 34 androsselbar ist. In der Figur 7 ist die Stauventileinrichtung 90 als Schaltventil 95 gemäß der Figur 3 ausgebildet. Alternativ kann die Stauventileinrichtung 90 gemäß der Figur 2 oder den Figuren 4 bis 6 ausgebildet sein.

Mit dem Ventil 170 der Figur 7 kann bei einer Arbeitsmaschine mit einer Vorzugsfahrtrichtung, beispielsweise der Vorwärtsfahrt, bei geringem Bauaufwand für das Ventil 170 ein Zuschalten der Arbeitshydraulikpumpe 25 in den geschlossenen Kreislauf des Fahrantriebs 2 erzielt werden.

In den Figuren 1 bis 7 ist die Steuerventileinrichtung 60 jeweils als Proportionalventil ausgebildet. Alternativ kann die Steuerventileinrichtung 60 als Schaltventil ausgebildet sein.

Die Erfindung ist nicht auf die dargestellten Ausführungsbeispiele beschränkt. Es versteht sich, dass die Ausführungsbeispiele mit Bremsventilen 51a, 51 auch ohne Bremsventile in den Druckmittelleitungen 6a, 6b des Fahrantriebs 2 ausgeführt werden können und mit dem Druckabsicherungsventil 150 und dem Retarderventil 16 gemäß den Figuren 5 und 6 ausgeführt werden können.

Mit der Steuerventileinrichtung 60 in Verbindung mit dem Sperrventil 61 in der Ansaugleitung 31 der Arbeitshydraulikpumpe 25 kann somit auf einfache Weise und bei geringem Bauaufwand erzielt werden, dass die Arbeitshydraulikpumpe 25 in den geschlossenen Kreislaufs des Fahrantriebs 2 eingebunden werden kann, so dass der Volumenstrom zum Antrieb des Fahrmotors 5 bei höheren Fahrgeschwindigkeiten anteilig von der Fahrpumpe 3 und der Arbeitshydraulikpumpe 25 bereitgestellt wird.

Das Verdrängervolumen und somit die Baugröße der Fahrpumpe 3 kann somit bei gleicher erzielbarer Fahrgeschwindigkeit verringert werden, wodurch sich Vorteile hinsichtlich des Bauraums, der Kosten der Fahrpumpe 3 und des Wirkungsrades des Fahrantriebs 2 erzielen lassen. Zudem kann die Leerlaufverlustleistung der Fahrpumpe 3 verringert werden. Da bei der erfindungsgemäßen Arbeitsmaschine die Arbeitshydraulikpumpe 25 ebenfalls zur Versorgung des Fahrmotors 5 verwendet werden kann, ergeben sich Vorteile auf den Gesamtwirkungsgrad der Arbeitsmaschine, da die Arbeitshydraulikpumpe 25 bei höheren Fahrgeschwindigkeiten nicht mehr in einem Leerlaufbetrieb mitgeschleppt wird, sondern bei einem günstigen Wirkungsgrad zur Versorgung des Fahrmotors 5 verwendet werden kann. Alternativ kann durch die zusätzliche Versorgung des Fahrmotors 5 durch die Arbeitshydraulikpumpe 25 bei unverändertem Verdrängervolumen der Fahrpumpe 3 und gleicher erzielbarer Fahrgeschwindigkeit die Fahrgeschwindigkeit bei verringerter Antriebsdrehzahl des Antriebsmotors 4 erzielt werden. Alternativ kann durch die zusätzliche Versorgung des Fahrmotors 5 durch die Arbeitshydraulikpumpe 25 bei unverändertem Verdrängervolumen und somit unveränderter Baugröße der Fahrpumpe 3 die Fahrgeschwindigkeit der Arbeitsmaschine erhöht werden.

## Patentansprüche

1. Mobile Arbeitsmaschine mit einem hydrostatischen Fahrantrieb (2) und einer Arbeitshydraulikpumpe (25), wobei der hydrostatische Fahrantrieb (2) eine von einem Antriebsmotor (4), insbesondere einem Verbrennungsmotor, der Arbeitsmaschine angetriebene Fahrpumpe (3) und zumindest einen im geschlossenen Kreislauf an die Fahrpumpe (3) angeschlossenen Fahrmotor (5) aufweist, wobei der geschlossenen Kreislauf eine erste Druckmittelleitung (6a) und eine zweite Druckmittelleitung (6b) umfasst, und wobei die Arbeitshydraulikpumpe (25) von dem Antriebsmotor (4) angetrieben ist und als im offenen Kreislauf betriebene Pumpe ausgebildet ist, die mittels einer Ansaugleitung (31) Druckmittel aus einem Behälter (11) ansaugt und das Druckmittel in eine Förderleitung (32) zur Versorgung mindestens eines Verbrauchers (33) einer Arbeitshydraulik (34) der Arbeitsmaschine mit Druckmittel fördert, **dadurch gekennzeichnet, dass** eine Steuerventileinrichtung (60) vorgesehen ist, mittels der die Verbindung der Förderleitung (32) und der Ansaugleitung (31) der Arbeitshydraulikpumpe (25) mit den Druckmittelleitungen (6a, 6b) des geschlossenen Kreislaufs steuerbar ist, wobei die Steuerventileinrichtung (60) eine Sperrstellung (60a) und mindestens eine Verbindungsstellung (60b; 60c) aufweist, wobei in der Verbindungsstellung (60b; 60c) die Förderleitung (32) der Arbeitshydraulikpumpe (25) mit der hochdruckseitigen Druckmittelleitung (6a; 6b) des hydrostatischen Fahrantriebs (2) verbindbar ist, wobei der Fördervolumenstrom der Arbeitshydraulikpumpe (25) in die hochdruckseitige Druckmittelleitung (6a; 6b) des hydrostatischen Fahrantriebs (2) einspeisbar ist und zur Versorgung des Fahrmotors (5) zur Verfügung steht, und wobei in der Verbindungsstellung (60b; 60c) die Ansaugleitung (31) der Arbeitshydraulikpumpe (25) mit der niederdruckseitigen Druckmittelleitung (6b; 6a) des hydrostatischen Fahrantriebs (2) verbindbar ist, wobei in der Ansaugleitung (31) der Arbeitshydraulikpumpe (25) ein in Richtung zum Behälter (11) sperrendes Sperrventil (61), insbesondere ein Rückschlagventil, angeordnet ist und die Zurückführung des Volumenstrom aus der niederdruckseitigen Druckmittelleitung (6b; 6a) des hydrostatischen Fahrantriebs (2) in die Ansaugleitung (31) zwischen dem Sperrventil (61) und einer Ansaugseite (S) der Arbeitshydraulikpumpe (25) erfolgt.

2. Mobile Arbeitsmaschine nach Anspruch 1, **dadurch gekennzeichnet, dass** die Steuerventileinrichtung (60) elektrisch betätigbar ist und zur Ansteuerung mit einer elektronischen Steuereinrichtung (41) in Verbindung steht, wobei die elektronische Steuereinrichtung (41) derart ausgebildet ist, dass oberhalb einer Grenzfahrgeschwindigkeit die Steuerventileinrichtung (60) in die Verbindungsstellung (60b; 60c) betätigt wird unterhalb der Grenzfahrgeschwindigkeit die Steuerventileinrichtung (60) in die Sperrstellung (60a) betätigt wird.

3. Mobile Arbeitsmaschine nach Anspruch 1 oder 2, **dadurch gekennzeichnet, dass** die Arbeitshydraulikpumpe (25) als elektrisch in dem Verdrängervolumen verstellbare Verstellpumpe ausgebildet ist und zur Vorgabe des Verdrängervolumens mit der elektronischen Steuereinrichtung (41) in Verbindung steht, wobei die elektronische Steuereinrichtung (41) derart ausgebildet ist, dass das Verdrängervolumen zur Versorgung des Fahrmotors (5) auf einen Wert unterhalb des maximalen Verdrängervolumens begrenzt wird.

4. Mobile Arbeitsmaschine nach einem der Ansprüche 1 bis 3, **dadurch gekennzeichnet, dass** die Steuerventileinrichtung (60) als Dreistellungs-Sechsanschlussventil (65) ausgebildet ist, das an eine erste Verbindungsleitung (66a), die mit der ersten Druckmittelleitung (6a) des geschlossenen Kreislaufs verbunden ist, an eine zweite Verbindungsleitung (66b), die mit der zweiten Druckmittelleitung (6b) des geschlossenen Kreislaufs verbunden ist, an eine Förderzweigleitung (67), die mit der Förderleitung (32) der Arbeitshydraulikpumpe (25) in Verbindung steht, und an eine Ansaugzweigleitung (68), die mit der Ansaugleitung (31) der Arbeitshydraulikpumpe (25) in Verbindung steht, angeschlossen ist und einen Durchflusspfad (69) der Förderleitung (32) der Arbeitshydraulik (34) steuert, wobei in der Sperrstellung (60a) der Steuerventileinrichtung (60) der Durchflusspfad (69) der Förderleitung (32) der Arbeitshydraulik (34) geöffnet ist und die erste Verbindungsleitung (66a), die zweite Verbindungsleitung (66b), die Förderzweigleitung (67) und die Ansaugzweigleitung (68) abgesperrt sind, in einer ersten Verbindungstellung (60b) der Steuerventileinrichtung (60) der Durchflusspfad (69) der Förderleitung (32) der Arbeitshydraulik (34) absperrt sind und die Förderzweigleitung (67) mit der ersten Druckmittelleitung (6a) und die Ansaugzweigleitung (68) mit der zweiten Druckmittelleitung (6b) verbunden sind und in einer zweiten Verbindungstellung (60c) der Steuerventileinrichtung (60) der Durchflusspfad (69) der Förderleitung (32) der Arbeitshydraulik (34) absperrt sind und die Förderzweigleitung (67) mit der zweiten Druckmittelleitung (6b) und die Ansaugzweigleitung (68) mit der ersten Druckmittelleitung (6a) verbunden sind.

5. Mobile Arbeitsmaschine nach einem der Ansprüche 1 bis 3, **dadurch gekennzeichnet, dass** die Steuerventileinrichtung (60) als Dreistellungs-Vieranschlussventil (80) ausgebildet ist, das an eine erste Verbindungsleitung (66a), die mit der ersten Druckmittelleitung (6a) des geschlossenen Kreislaufs verbunden ist, an eine zweite Verbindungsleitung (66b), die mit der zweiten Druckmittelleitung (6b) des geschlossenen Kreislaufs verbunden ist, an eine Förderzweigleitung (67), die mit der Förderleitung (32) der Arbeitshydraulikpumpe (25) in Verbindung steht, und an eine Ansaugzweigleitung (68), die mit der Ansaugleitung (31) der Arbeitshydraulikpumpe (25) in Verbindung steht, angeschlossen ist, wobei in der Sperrstellung (60a) der Steuerventileinrichtung (60) die erste Verbindungsleitung (66a), die zweite Verbindungsleitung (66b), die Förderzweigleitung (67) und die Ansaugzweigleitung (68) abgesperrt sind, in einer ersten Verbindungstellung (60b) der Steuerventileinrichtung (60) die Förderzweigleitung (67) mit der ersten Druckmittelleitung (6a) und die Ansaugzweigleitung (68) mit der zweiten Druckmittelleitung (6b) verbunden sind und in einer zweiten Verbindungstellung (60c) der Steuerventileinrichtung (60) die Förderzweigleitung (67) mit der zweiten Druckmittelleitung (6b) und die Ansaugzweigleitung (68) mit der ersten Druckmittelleitung (6a) verbunden sind.

6. Mobile Arbeitsmaschine nach einem der Ansprüche 1 bis 3, **dadurch gekennzeichnet, dass** die Steuerventileinrichtung (60) als Zweistellungs-Vieranschlussventil (170) ausgebildet ist, das an eine erste Verbindungsleitung (66a), die mit der ersten Druckmittelleitung (6a) des geschlossenen Kreislaufs verbunden ist, an eine zweite Verbindungsleitung (66b), die mit der zweiten Druckmittelleitung (6b) des geschlossenen Kreislaufs verbunden ist, an eine Förderzweigleitung (67), die mit der Förderleitung (32) der Arbeitshydraulikpumpe (25) in Verbindung steht, und an eine Ansaugzweigleitung (68), die mit der Ansaugleitung (31) der Arbeitshydraulikpumpe (25) in Verbindung steht, angeschlossen ist, wobei in der Sperrstellung (60a) der Steuerventileinrichtung (60) die erste Verbindungsleitung (66a), die zweite Verbindungsleitung (66b), die Förderzweigleitung (67) und die Ansaugzweigleitung (68) abgesperrt sind, und in einer Verbindungstellung (60b) der Steuerventileinrichtung (60) die Förderzweigleitung (67) mit der ersten Druckmittelleitung (6a) und die Ansaugzweigleitung (68) mit der zweiten Druckmittelleitung (6b) verbunden sind.

7. Mobile Arbeitsmaschine nach Anspruch 5 oder 6, **dadurch gekennzeichnet, dass** eine Stauventileinrichtung (90) vorgesehen ist, mittels der der Volumenstrom der Arbeitshydraulikpumpe (25) zu dem Verbraucher (33) der Arbeitshydraulik (34) androsselbar ist.

8. Mobile Arbeitsmaschine nach Anspruch 7, **dadurch gekennzeichnet, dass** die Stauventileinrichtung (90) elektrisch betätigbar ist und zur Ansteuerung mit der elektronischen Steuereinrichtung (41) in Verbindung steht.

9. Mobile Arbeitsmaschine nach Anspruch 7 oder 8, **dadurch gekennzeichnet, dass** die Stauventileinrichtung (90) als Retarderventil (91) ausgebildet ist.

10. Mobile Arbeitsmaschine nach Anspruch 7 oder 8, **dadurch gekennzeichnet, dass** die Stauventileinrichtung (90) als Schaltventil (95) mit einer Sperrstellung (95a) und einer Öffnungsstellung (95b) ausgebildet ist.

11. Mobile Arbeitsmaschine nach einem der Ansprüche 7 bis 10, **dadurch gekennzeichnet, dass** die Stauventileinrichtung (90) in der Förderleitung (32) stromab des Anschlusses der Förderzweigleitung (67) angeordnet ist.

12. Mobile Arbeitsmaschine nach Anspruch 7 oder 8, **dadurch gekennzeichnet, dass** die Stauventileinrichtung (90) einen Volumenstromregler (100) aufweist, der mittels eines elektrisch betätigten Schaltventils (105) zu- und abschaltbar ist.

13. Mobile Arbeitsmaschine nach Anspruch 12, **dadurch gekennzeichnet, dass** der Volumenstromregler (100) in einer der Förderleitung (32) parallel geschalteten Zweigleitung (32a) angeordnet ist, die mit der Förderleitung (32) stromab des Anschlusses der Förderzweigleitung (67) verbindbar ist.

14. Mobile Arbeitsmaschine nach Anspruch 12, **dadurch gekennzeichnet, dass** der Volumenstromregler (100) in einer Zweigleitung (32a) angeordnet ist, die von der Förderzweigleitung (67) zu der Förderleitung (32) geführt ist.

15. Mobile Arbeitsmaschine nach einem der Ansprüche 12 bis 14, **dadurch gekennzeichnet, dass** die Stauventileinrichtung (90) ein in Richtung zu dem Verbraucher (33) der Arbeitshydraulik (34) öffnendes Sperrventil (115), insbesondere Rückschlagventil, aufweist.

16. Mobile Arbeitsmaschine nach einem der Ansprüche 1 bis 15, **dadurch gekennzeichnet, dass** in den Druckmittelleitungen (6a, 6b) des geschlossenen Kreislaufs jeweils ein Bremsventil (51a, 51b) angeordnet ist, wobei in der Verbindungsstellung (60b; 60c) der Steuerventileinrichtung (60) die Förderleitung (32) der Arbeitshydraulikpumpe (25) mit der hochdruckseitigen Druckmittelleitung (6a; 6b) des hydrostatischen Fahrantriebs (2) zwischen der Fahrpumpe (3) und dem Bremsventil (51a; 51b) verbindbar ist und die Ansaugleitung (31) der Arbeitshydraulikpumpe (25) mit der niederdruckseitigen Druckmittelleitung (6b; 6a) des hydrostatischen Fahrantriebs (2) zwischen dem Bremsventil (51b; 51a) und der Fahrpumpe (3) verbindbar ist.

17. Mobile Arbeitsmaschine nach einem der Ansprüche 1 bis 15, **dadurch gekennzeichnet, dass** in der Ansaugzweigleitung (68) ein Druckabsicherungsventil (150) angeordnet ist.

18. Mobile Arbeitsmaschine nach Anspruch 17, **dadurch gekennzeichnet, dass** das Druckabsicherungsventil (150) als Druckbegrenzungsventil oder als Retarderventil ausgebildet ist.

19. Mobile Arbeitsmaschine nach einem der Ansprüche 4 bis 18, **dadurch gekennzeichnet, dass** in der Förderzweigleitung (67) ein in Richtung zur Förderleitung (32) sperrendes Sperrventil (70), insbesondere Rückschlagventil, angeordnet ist.

20. Mobile Arbeitsmaschine nach einem der Ansprüche 1 bis 19, **dadurch gekennzeichnet, dass** die Arbeitshydraulikpumpe (25) mittels eines Prioritätsventils (36) zur bevorzugten Versorgung eines hydraulischen Verbrauchers (35), insbesondere einer hydraulischen Lenkungseinrichtung, vorgesehen ist.

21. Mobile Arbeitsmaschine nach einem der Ansprüche 1 bis 19, **dadurch gekennzeichnet, dass** die Steuerventileinrichtung (60) als Schaltventil oder als Proportionalventil ausgebildet ist.

## Claims

1. Mobile machine having a hydrostatic traction drive (2) and a working hydraulic pump (25), the hydrostatic traction drive (2) comprising a traction pump (3) which is driven by a drive motor (4), in particular an internal combustion engine, of the machine, and at least one traction motor (5) which is connected to the traction pump (3) in a closed circuit, the closed circuit comprising a first pressure medium line (6a) and a second pressure medium line (6b), and the working hydraulic pump (25) being driven by the drive motor (4) and being configured as a pump which is operated in an open circuit, sucks in pressure medium from a container (11) by means of an intake line (31), and delivers the pressure medium into a delivery line (32) in order to supply at least one consumer (33) of a working hydraulic system (34) of the machine with pressure medium, **characterized in that** a control valve device (60) is provided, by means of which the connection of the delivery line (32) and the intake line (31) of the working hydraulic pump (25) to the pressure medium lines (6a, 6b) of the closed circuit can be controlled, the control valve device (60) having a shut-off position (60a) and at least one connecting position (60b; 60c), it being possible, in the connecting position (60b; 60c), for the delivery line (32) of the working hydraulic pump (25) to be connected to the high pressure-side pressure medium line (6a; 6b) of the hydrostatic traction drive (2), it being possible for the delivery volumetric flow of the working hydraulic pump (25) to be fed into the high pressure-side pressure medium line (6a; 6b) of the hydrostatic traction drive (2), and the said delivery volumetric flow being available to supply the traction motor (5), and it being possible, in the connecting position (60b; 60c), for the intake line (31) of the working hydraulic pump (25) to be connected to the low pressure-side pressure medium line (6b; 6a) of the hydrostatic traction drive (2), a shut-off valve (61) which shuts off in the direction of the container (11), in particular a check valve, being arranged in the intake line (31) of the working hydraulic pump (25), and the volumetric flow being fed back out of the low pressure-side pressure medium line (6b; 6a) of the hydrostatic traction drive (2) into the intake line (31) between the shut-off valve (61) and an intake side (S) of the working hydraulic pump (25).

2. Mobile machine according to Claim 1, **characterized in that** the control valve device (60) can be actuated electrically and is connected for actuation purposes to an electronic control device (41), the electronic control device (41) being configured in such a way that the control valve device (60) is actuated into the connecting position (60b; 60c) above a limit driving speed, and the control valve device (60) is actuated into the shut-off position (60a) below the limit driving speed.

3. Mobile machine according to Claim 1 or 2, **characterized in that** the working hydraulic pump (25) is configured as a variable displacement pump, the displacer volume of which can be adjusted electrically, and is connected to the electronic control device (41) in order to specify the displacer volume, the electronic control device (41) being configured in such a way that the displacer volume for supplying the traction motor (5) is limited to a value below the maximum displacer volume.

4. Mobile machine according to one of Claims 1 to 3, **characterized in that** the control valve device (60) is configured as a valve (65) with three positions and six connectors, which valve (65) is connected to a first connecting line (66a) which is connected to the first pressure medium line (6a) of the closed circuit, to a second connecting line (66b) which is connected to the second pressure medium line (6b) of the closed circuit, to a delivery branch line (67) which is connected to the delivery line (32) of the working hydraulic pump (25), and to an intake branch line (68) which is connected to the intake line (31) of the working hydraulic pump (25), and controls a throughflow path (69) of the delivery line (32) of the working hydraulic system (34), the throughflow path (69) of the delivery line (32) of the working hydraulic system (34) being open in the shut-off position (60a) of the control valve device (60) and the first connecting line (66a), the second connecting line (66b), the delivery branch line (67) and the intake branch line (68) being shut off, the throughflow path (69) of the delivery line (32) of the working hydraulic system (34) being shut off in a first connecting position (60b) of the control valve device (60) and the delivery branch line (67) being connected to the first pressure medium line (6a) and the intake branch line (68) being connected to the second pressure medium line (6b), and the throughflow path (69) of the delivery line (32) of the working hydraulic system (34) being shut off in a second connecting position (60c) of the control valve device (60) and the delivery branch line (67) being connected to the second pressure medium line (6b) and the intake branch line (68) being connected to the first pressure medium line (6a).

5. Mobile machine according to one of Claims 1 to 3, **characterized in that** the control valve device (60) is configured as a valve (80) with three positions and four connectors, which valve (80) is connected to a first connecting line (66a) which is connected to the first pressure medium line (6a) of the closed circuit, to a second connecting line (66b) which is connected to the second pressure medium line (6b) of the closed circuit, to a delivery branch line (67) which is connected to the delivery line (32) of the working hydraulic pump (25), and to an intake branch line (68) which is connected to the intake line (31) of the working hydraulic pump (25), the first connecting line (66a), the second connecting line (66b), the delivery branch line (67) and the intake branch line (68) being shut off in the shut-off position (60a) of the control valve device (60), the delivery branch line (67) being connected to the first pressure medium line (6a) and the intake branch line (68) being connected to the second pressure medium line (6b) in a first connecting position (60b) of the control valve device (60), and the delivery branch line (67) being connected to the second pressure medium line (6b) and the intake branch line (68) being connected to the first pressure medium line (6a) in a second connecting position (60c) of the control valve device (60).

6. Mobile machine according to one of Claims 1 to 3, **characterized in that** the control valve device (60) is configured as a valve (170) with two positions and four connectors, which valve (170) is connected to a first connecting line (66a) which is connected to the first pressure medium line (6a) of the closed circuit, to a second connecting line (66b) which is connected to the second pressure medium line (6b) of the closed circuit, to a delivery branch line (67) which is connected to the delivery line (32) of the working hydraulic pump (25), and to an intake branch line (68) which is connected to the intake line (31) of the working hydraulic pump (25), the first connecting line (66a), the second connecting line (66b), the delivery branch line (67) and the intake branch line (68) being shut off in the shut-off position (60a) of the control value device (60) and the delivery branch line (67) being connected to the first pressure medium line (6a) and the intake branch line (68) being connected to the second pressure medium line (6b) in a connecting position (60b) of the control valve device (60).

7. Mobile machine according to Claim 5 or 6, **characterized in that** an accumulator valve device (90) is provided, by means of which the volumetric flow of the working hydraulic pump (25) to the consumer (33) of the working hydraulic system (34) can be throttled.

8. Mobile machine according to Claim 7, **characterized in that** the accumulator valve device (90) can be actuated electrically and is connected for actuation purposes to the electronic control device (41).

9. Mobile machine according to Claim 7 or 8, **characterized in that** the accumulator valve device (90) is configured as a retarder valve (91).

10. Mobile machine according to Claim 7 or 8, **characterized in that** the accumulator valve device (90) is configured as a switching valve (95) with a shut-off position (95a) and an open position (95b).

11. Mobile machine according to one of Claims 7 to 10, **characterized in that** the accumulator valve device (90) is arranged in the delivery line (32) downstream of the connector of the delivery branch line (67).

12. Mobile machine according to Claim 7 or 8, **characterized in that** the accumulator valve device (90) comprises a volumetric flow regulator (100) which can be switched on and off by means of an electrically actuated switching valve (105).

13. Mobile machine according to Claim 12, **characterized in that** the volumetric flow regulator (100) is arranged in a branch line (32a) which is connected in parallel to the delivery line (32) and can be connected to the delivery line (32) downstream of the connector of the delivery branch line (67).

14. Mobile machine according to Claim 12, **characterized in that** the volumetric flow regulator (100) is arranged in a branch line (32a) which is routed from the delivery branch line (67) to the delivery line (32).

15. Mobile machine according to one of Claims 12 to 14, **characterized in that** the accumulator valve device (90) comprises a shut-off valve (115), in particular a check valve, which opens in the direction of the consumer (33) of the working hydraulic system (34).

16. Mobile machine according to one of Claims 1 to 15, **characterized in that** in each case one brake valve (51a, 51b) is arranged in the pressure medium lines (6a, 6b) of the closed circuit, it being possible, in the connecting position (60b; 60c) of the control valve device (60), for the delivery line (32) of the working hydraulic pump (25) to be connected to the high pressure-side pressure medium line (6a; 6b) of the hydrostatic traction drive (2) between the traction pump (3) and the brake valve (51a; 51b), and for the intake line (31) of the working hydraulic pump (25) to be connected to the low pressure-side pressure medium line (6b; 6a) of the hydrostatic traction drive (2) between the brake valve (51b; 51a) and the traction pump (3).

17. Mobile machine according to one of Claims 1 to 15, **characterized in that** a pressure protection valve (150) is arranged in the intake branch line (68).

18. Mobile machine according to Claim 17, **characterized in that** the pressure protection valve (150) is configured as a pressure limiting valve or as a retarder valve.

19. Mobile machine according to one of Claims 4 to 18, **characterized in that** a shut-off valve (70), in particular a check valve, which shuts off in the direction of the delivery line (32) is arranged in the delivery branch line (67).

20. Mobile machine according to one of Claims 1 to 19, **characterized in that** the working hydraulic pump (25) is provided by means of a priority valve (36) for the preferred supply of one hydraulic consumer (35), in particular a hydraulic steering device.

21. Mobile machine according to one of Claims 1 to 19, **characterized in that** the control valve device (60) is configured as a switching valve or as a proportional valve.

## Revendications

1. Machine de travail mobile avec un entraînement de roulage hydrostatique (2) et une pompe hydraulique de travail (25), dans laquelle l'entraînement de roulage hydrostatique (2) présente une pompe de roulage (3) entraînée par un moteur d'entraînement (4), en particulier un moteur à combustion interne, de la machine de travail et au moins un moteur de roulage (5) raccordé en circuit fermé à la pompe de roulage (3), dans laquelle le circuit fermé comprend une première conduite de fluide sous pression (6a) et une deuxième conduite de fluide sous pression (6b), et dans laquelle la pompe hydraulique de travail (25) est entraînée par le moteur d'entraînement (4) et est configurée comme une pompe entraînée en circuit ouvert, qui aspire du fluide sous pression hors d'un réservoir (11) au moyen d'une conduite d'aspiration (31) et qui refoule le fluide sous pression dans une conduite de refoulement (32) pour l'alimentation en fluide sous pression d'au moins un consommateur (33) d'un système hydraulique de travail (34) de la machine de travail, **caractérisée en ce qu'**il est prévu un dispositif de vanne de commande (60), au moyen duquel la communication de la conduite de refoulement (32) et de la conduite d'aspiration (31) de la pompe hydraulique de travail (25) avec les conduites de fluide sous pression (6a, 6b) du circuit fermé peut être commandée, dans laquelle le dispositif de vanne de commande (60) présente une position d'arrêt (60a) et au moins une position de communication (60b; 60c), dans laquelle dans la position de communication (60b; 60c) la conduite de refoulement (32) de la pompe hydraulique de travail (25) peut être reliée à la conduite de fluide sous pression côté haute pression (6a; 6b) de l'entraînement de roulage hydrostatique (2), dans laquelle le courant volumétrique de refoulement de la pompe hydraulique de travail (25) peut être introduit dans la conduite de fluide sous pression côté haute pression (6a; 6b) de l'entraînement de roulage hydrostatique (2) et est disponible pour l'alimentation du moteur de roulage (5), et dans laquelle dans la position de communication (60b; 60c) la conduite d'aspiration (31) de la pompe hydraulique de travail (25) peut être reliée à la conduite de fluide sous pression côté basse pression (6b; 6a) de l'entraînement de roulage hydrostatique (2), dans laquelle une vanne d'arrêt (61) bloquant en direction du réservoir (11) est disposée dans la conduite d'aspiration (31) de la pompe hydraulique de travail (25), en particulier un clapet anti-retour, et le retour du courant volumétrique de la conduite de fluide sous pression côté basse pression (6b; 6a) de l'entraînement de roulage hydrostatique (2) dans la conduite d'aspiration (31) est effectué entre la vanne d'arrêt (61) et un côté d'aspiration (S) de la pompe hydraulique de travail (25).

2. Machine de travail mobile selon la revendication 1, **caractérisée en ce que** le dispositif de vanne de commande (60) peut être actionné électriquement et est en liaison pour sa commande avec un dispositif de commande électronique (41), dans laquelle le dispositif de commande électronique (41) est configuré de telle manière qu'au-dessus d'une vitesse de roulage limite le dispositif de vanne de commande (60) soit amené dans la position de communication (60b; 60c) et qu'en dessous de la vitesse de roulage limite le dispositif de vanne de commande (60) soit amené dans la position d'arrêt (60a).

3. Machine de travail mobile selon la revendication 1 ou 2, **caractérisée en ce que** la pompe hydraulique de travail (25) est configurée en pompe à cylindrée variable avec un volume de déplacement réglable électriquement et est en liaison avec le dispositif de commande électronique (41) pour la prédétermination du volume de déplacement, dans laquelle le dispositif de commande électronique (41) est configuré de telle manière que le volume de déplacement destiné à l'alimentation du moteur de roulage (5) soit limité à une valeur inférieure au volume de déplacement maximal.

4. Machine de travail mobile selon l'une quelconque des revendications 1 à 3, **caractérisée en ce que** le dispositif de vanne de commande (60) est réalisé sous forme de vanne à six raccords et trois positions (65), qui est raccordée à une première conduite de liaison (66a), qui est reliée à la première conduite de fluide sous pression (6a) du circuit fermé, à une deuxième conduite de liaison (66b), qui est reliée à la deuxième conduite de fluide sous pression (6b) du circuit fermé, à une conduite dérivée de refoulement (67), qui est en liaison avec la conduite de refoulement (32) de la pompe hydraulique de travail (25), et à une conduite dérivée d'aspiration (68), qui est en liaison avec la conduite d'aspiration (31) de la pompe hydraulique de travail (25), et commande un chemin d'écoulement (69) de la conduite de refoulement (32) du système hydraulique de travail (34), dans laquelle dans la position d'arrêt (60a) du dispositif de vanne de commande (60) le chemin d'écoulement (69) de la conduite de refoulement (32) du système hydraulique de travail (34) est ouvert et la première conduite de liaison (66a), la deuxième conduite de liaison (66b), la conduite dérivée de refoulement (67) et la conduite dérivée d'aspiration (68) sont bloquées, dans une première position de communication (60b) du dispositif de vanne de commande (60) le chemin d'écoulement (69) de la conduite de refoulement (32) du système de travail hydraulique (34) est bloqué et la conduite dérivée de refoulement (67) est raccordée à la première conduite de fluide sous pression (6a) et la conduite dérivée d'aspiration (68) est raccordée à la deuxième conduite de fluide sous pression (6b), et dans une deuxième position de communication (60c) du dispositif de vanne de commande (60) le chemin d'écoulement (69) de la conduite de refoulement (32) du système hydraulique de travail (34) est bloqué et la conduite dérivée de refoulement (67) est raccordée à la deuxième conduite de fluide sous pression (6b) et la conduite dérivée d'aspiration (68) est raccordée à la première conduite de fluide sous pression (6a).

5. Machine de travail mobile selon l'une quelconque des revendications 1 à 3, **caractérisée en ce que** le dispositif de vanne de commande (60) est configuré sous forme de vanne à quatre raccords et trois positions (80), qui est raccordée à une première conduite de liaison (66a), qui est reliée à la première conduite de fluide sous pression (6a) du circuit fermé, à une deuxième conduite de liaison (66b), qui est reliée à la deuxième conduite de fluide sous pression (6b) du circuit fermé, à une conduite dérivée de refoulement (67), qui est en liaison avec la conduite de refoulement (32) de la pompe hydraulique de travail (25), et à une conduite dérivée d'aspiration (68), qui est en liaison avec la conduite d'aspiration (31) de la pompe hydraulique de travail (25), dans laquelle dans la position d'arrêt (60a) du dispositif de vanne de commande (60) la première conduite de liaison (66a), la deuxième conduite de liaison (66b), la conduite dérivée de refoulement (67) et la conduite dérivée d'aspiration (68) sont bloquées, dans une première position de communication (60b) du dispositif de vanne de commande (60) la conduite dérivée de refoulement (67) est raccordée à la première conduite de fluide sous pression (6a) et la conduite dérivée d'aspiration (68) est raccordée à la deuxième conduite de fluide sous pression (6b), et dans une deuxième position de communication (60c) du dispositif de vanne de commande (60) la conduite dérivée de refoulement (67) est raccordée à la deuxième conduite de fluide sous pression (6b) et la conduite dérivée d'aspiration (68) est raccordée à la première conduite de fluide sous pression (6a).

6. Machine de travail mobile selon l'une quelconque des revendications 1 à 3, **caractérisée en ce que** le dispositif de vanne de commande (60) est configuré sous forme de vanne à quatre raccords et deux positions (170), qui est raccordée à une première conduite de liaison (66a), qui est reliée à la première conduite de fluide sous pression (6a) du circuit fermé, à une deuxième conduite de liaison (66b), qui est reliée à la deuxième conduite de fluide sous pression (6b) du circuit fermé, à une conduite dérivée de refoulement (67), qui est en liaison avec la conduite de refoulement (32) de la pompe hydraulique de travail (25), et à une conduite dérivée d'aspiration (68), qui est en liaison avec la conduite d'aspiration (31) de la pompe hydraulique de travail (25), dans laquelle dans la position d'arrêt (60a) du dispositif de vanne de commande (60) la première conduite de liaison (66a), la deuxième conduite de liaison (66b), la conduite dérivée de refoulement (67) et la conduite dérivée d'aspiration (68) sont bloquées, et dans une position de communication (60b) du dispositif de vanne de commande (60) la conduite dérivée de refoulement (67) est raccordée à la première conduite de fluide sous pression (6a) et la conduite dérivée d'aspiration (68) est raccordée à la deuxième conduite de fluide sous pression (6b).

7. Machine de travail mobile selon la revendication 5 ou 6, **caractérisée en ce qu'**il est prévu un dispositif de vanne de retenue (90), au moyen duquel le courant volumétrique de la pompe hydraulique de travail (25) vers le consommateur (33) du système hydraulique de travail (34) peut être étranglé.

8. Machine de travail mobile selon la revendication 7, **caractérisée en ce que** le dispositif de vanne de retenue (90) peut être actionné électriquement et est en liaison pour sa commande avec le dispositif de commande électronique (41).

9. Machine de travail mobile selon la revendication 7 ou 8, **caractérisée en ce que** le dispositif de vanne de retenue (90) est constitué par une vanne retardatrice (91) .

10. Machine de travail mobile selon la revendication 7 ou 8, **caractérisée en ce que** le dispositif de vanne de retenue (90) est réalisé sous la forme d'une soupape de commande (95) avec une position d'arrêt (95a) et une position d'ouverture (95b).

11. Machine de travail mobile selon l'une quelconque des revendications 7 à 10, **caractérisée en ce que** le dispositif de vanne de retenue (90) est disposé dans la conduite de refoulement (32) en aval du raccord de la conduite dérivée de refoulement (67).

12. Machine de travail mobile selon la revendication 7 ou 8, **caractérisée en ce que** le dispositif de vanne de retenue (90) présente un régulateur de courant volumétrique (100), qui peut être connecté et déconnecté au moyen d'une soupape de commande (105) actionnée électriquement.

13. Machine de travail mobile selon la revendication 12, **caractérisée en ce que** le régulateur de courant volumétrique (100) est disposé dans une conduite dérivée (32a) montée en parallèle à la conduite de refoulement (32), qui peut être raccordée à la conduite de refoulement (32) en aval du raccord de la conduite dérivée de refoulement (67).

14. Machine de travail mobile selon la revendication 12, **caractérisée en ce que** le régulateur de courant volumétrique (100) est disposé dans une conduite dérivée (32a), qui est menée de la conduite dérivée de refoulement (67) à la conduite de refoulement (32).

15. Machine de travail mobile selon l'une quelconque des revendications 12 à 14, **caractérisée en ce que** le dispositif de vanne de retenue (90) présente une soupape d'arrêt (115), en particulier un clapet anti-retour, s'ouvrant en direction du consommateur (33) du système hydraulique de travail (34).

16. Machine de travail mobile selon l'une quelconque des revendications 1 à 15, **caractérisée en ce qu'**une soupape de frein (51a, 51b) est disposée respectivement dans les conduites de fluide sous pression (6a, 6b) du circuit fermé, dans laquelle dans la position de communication (60b; 60c) du dispositif de vanne de commande (60) la conduite de refoulement (32) de la pompe hydraulique de travail (25) peut être reliée à la conduite de fluide sous pression côté haute pression (6a; 6b) de l'entraînement de roulage hydrostatique (2) entre la pompe de roulage (3) et la soupape de frein (51a; 51b) et la conduite d'aspiration (31) de la pompe hydraulique de travail (25) peut être reliée à la conduite de fluide sous pression côté basse pression (6b; 6a) de l'entraînement de roulage hydrostatique (2) entre la soupape de frein (51b; 51a) et la pompe de roulage (3).

17. Machine de travail mobile selon l'une quelconque des revendications 1 à 15, **caractérisée en ce qu'**une soupape de sécurité de pression (150) est disposée dans la conduite dérivée d'aspiration (68).

18. Machine de travail mobile selon la revendication 17, **caractérisée en ce que** la soupape de sécurité de pression (150) est constituée par une soupape de limitation de pression ou par une soupape retardatrice.

19. Machine de travail mobile selon l'une quelconque des revendications 4 à 18, **caractérisée en ce qu'**une soupape d'arrêt (70), en particulier un clapet anti-retour, bloquant en direction de la conduite de refoulement (32), est disposée dans la conduite dérivée de refoulement (67) .

20. Machine de travail mobile selon l'une quelconque des revendications 1 à 19, **caractérisée en ce que** la pompe hydraulique de travail (25) est prévue pour l'alimentation préférée d'un consommateur hydraulique (35), en particulier d'un dispositif de direction hydraulique, au moyen d'une soupape de priorité (36).

21. Machine de travail mobile selon l'une quelconque des revendications 1 à 19, **caractérisée en ce que** le dispositif de vanne de commande (60) est réalisé sous forme de soupape de commande ou de soupape proportionnelle.
